# EUROPEAN PATENT APPLICATION

(11) **EP 4 811 689 A1**
(43) Date of publication of application: **23.09.2026**
(21) Application number: 24908071.4
(22) Date of filing: 18.12.2024
(51) Int. Cl.: H04L 1/00

(54) **METHOD AND APPARATUS FOR ENSEMBLE DECODING OF CHANNEL CODE IN WIRELESS COMMUNICATION AND BROADCASTING SYSTEM**

(30) Priority: 18.12.2023 KR 20230184170
(71) Applicant: Samsung Electronics Co., Ltd., Suwon-si, Gyeonggi-do 16677 (KR)
(72) Inventor: JANG, Min, Suwon-si Gyeonggi-do 16677 (KR); MYUNG, Seho, Suwon-si Gyeonggi-do 16677 (KR); LEE, Hyunjae, Suwon-si Gyeonggi-do 16677 (KR); LIM, Hyuntack, Suwon-si Gyeonggi-do 16677 (KR)
(74) Representative: Gulde & Partner
(86) International application number: PCT/KR2024/020623
(87) International publication number: WO 2025/135788

(57) **Abstract**

The present disclosure relates to a 5G or 6G communication system for supporting a data transmission rate higher than that of a 4G communication system such as LTE. This method for decoding a channel code of a reception device in a wireless communication system, according to one embodiment of the present invention, comprises the steps of: generating a first input sequence on the basis of a bit that is received from a transmission device and encoded with a channel code; determining, in the first input sequence, on the basis of the structure of the channel code, a search range of at least one element to be changed in order to generate a plurality of second input sequences; determining, on the basis of the search range, at least one element to be changed in order to generate a plurality of second input sequences; generating the plurality of second input sequences by changing the at least one element; and determining a final decoding result by performing decoding on each of the plurality of second input sequences.

## Description

### [Technical Field]

The disclosure relates generally to a communication or a broadcast system and, more specifically, to a method and an apparatus for decoding data in a communication or broadcast system using a channel code.

### [Background Art]

Considering the development of wireless communication from generation to generation, the technologies have been developed mainly for services targeting humans, such as voice calls, multimedia services, and data services. Following the commercialization of 5G (5th-generation) communication systems, it is expected that the number of connected devices will exponentially grow. Increasingly, these will be connected to communication networks. Examples of connected things may include vehicles, robots, drones, home appliances, displays, smart sensors connected to various infrastructures, construction machines, and factory equipment. Mobile devices are expected to evolve in various form-factors, such as augmented reality glasses, virtual reality headsets, and hologram devices. In order to provide various services by connecting hundreds of billions of devices and things in the 6G (6th-generation) era, there have been ongoing efforts to develop improved 6G communication systems. For these reasons, 6G communication systems are referred to as beyond-5G systems.

6G communication systems, which are expected to be commercialized around 2030, will have a peak data rate of tera (1,000 giga)-level bps and a radio latency less than 100µsec, and thus will be 50 times as fast as 5G communication systems and have the 1/10 radio latency thereof.

In order to accomplish such a high data rate and an ultra-low latency, it has been considered to implement 6G communication systems in a terahertz band (for example, 95GHz to 3THz bands). It is expected that, due to severer path loss and atmospheric absorption in the terahertz bands than those in mmWave bands introduced in 5G, technologies capable of securing the signal transmission distance (that is, coverage) will become more crucial. It is necessary to develop, as major technologies for securing the coverage, radio frequency (RF) elements, antennas, novel waveforms having a better coverage than orthogonal frequency division multiplexing (OFDM), beamforming and massive multiple input multiple output (MIMO), full dimensional MIMO (FD-MIMO), array antennas, and multiantenna transmission technologies such as large-scale antennas. In addition, there has been ongoing discussion on new technologies for improving the coverage of terahertz-band signals, such as metamaterial-based lenses and antennas, orbital angular momentum (OAM), and reconfigurable intelligent surface (RIS).

Moreover, in order to improve the spectral efficiency and the overall network performances, the following technologies have been developed for 6G communication systems: a full-duplex technology for enabling an uplink transmission and a downlink transmission to simultaneously use the same frequency resource at the same time; a network technology for utilizing satellites, high-altitude platform stations (HAPS), and the like in an integrated manner; an improved network structure for supporting mobile base stations and the like and enabling network operation optimization and automation and the like; a dynamic spectrum sharing technology via collision avoidance based on a prediction of spectrum usage; an use of artificial intelligence (AI) in wireless communication for improvement of overall network operation by utilizing AI from a designing phase for developing 6G and internalizing end-to-end AI support functions; and a next-generation distributed computing technology for overcoming the limit of UE computing ability through reachable super-high-performance communication and computing resources (such as mobile edge computing (MEC), clouds, and the like) over the network. In addition, through designing new protocols to be used in 6G communication systems, developing mechanisms for implementing a hardware-based security environment and safe use of data, and developing technologies for maintaining privacy, attempts to strengthen the connectivity between devices, optimize the network, promote softwarization of network entities, and increase the openness of wireless communications are continuing.

It is expected that research and development of 6G communication systems in hyper-connectivity, including person to machine (P2M) as well as machine to machine (M2M), will allow the next hyper-connected experience. Particularly, it is expected that services such as truly immersive extended reality (XR), high-fidelity mobile hologram, and digital replica could be provided through 6G communication systems. In addition, services such as remote surgery for security and reliability enhancement, industrial automation, and emergency response will be provided through the 6G communication system such that the technologies could be applied in various fields such as industry, medical care, automobiles, and home appliances.

In general, when data is transmitted and received between a transmitter and a receiver in a communication and broadcasting system, the performance of a link may be significantly degraded by various forms of noise, fading, and inter-symbol interference (ISI) in a communication channel. Therefore, to implement high-speed digital communication or broadcasting system that require high data throughput and reliability, such as next-generation mobile communications, digital broadcasting, and mobile internet, it is necessary to develop channel encoding and decoding technologies that overcome noise, fading, and inter-symbol interference.

### [Detailed Description of the Invention]

### [Technical Problem]

The disclosure relates to a communication or broadcasting system in general, and more specifically, to a method and a device for decoding data in a communication or broadcasting system using a channel code.

The disclosure aims to improve the decoding performance of a channel code that gradually updates a posterior probability, a posteriori log-likelihood ratio (AP-LLR), and the like, of a codeword bit by iterative processing, such as a turbo code and a low-density parity-check (LDPC) code in a communication or broadcasting system. Theoretically, a channel code has low error-correction performance when a code dimension (input length of an encoder as the number of information bits to be encoded) and a code length (output length of an encoder as the number of code word bits obtained by encoding) are short. Specifically, even when the code rate (the ratio of the code dimension to the code length) is the same, the error-correction performance in the case of a short code dimension and length is lower than the error-correction performance in the case of a long code dimension and length. In addition, a turbo code and an LDPC code have features that the performance is more significantly degraded when the code dimension and length are short.

The disclosure proposes a decoding method and a device for improving a low error-correction performance caused when the dimension and length of a channel code, such as a turbo code or an LDPC code, are short.

### [Technical Solution]

According to an embodiment of the disclosure, a method for decoding a channel code by a reception device in a wireless communication system includes generating a first input sequence, based on a bit that is received from a transmission device and encoded with a channel code; in the first input sequence, determining, based on the structure of the channel code, a search range of at least one element to be changed in order to generate a plurality of second input sequences; determining, based on the search range, at least one element to be changed in order to generate the plurality of second input sequences; changing the at least one element to generate the plurality of second input sequences; and performing decoding of each of the plurality of second input sequences to determine a final decoding result.

According to an embodiment of the disclosure, a reception device for performing decoding of a channel code in a wireless communication system includes a transceiver and at least one processor, wherein the at least one processor is configured to: generate a first input sequence, based on a bit that is received from a transmission device and encoded with a channel code; in the first input sequence, determine, based on the structure of the channel code, a search range of at least one element to be changed in order to generate a plurality of second input sequences; determine, based on the search range, at least one element to be changed in order to generate the plurality of second input sequences; change the at least one element to generate the plurality of second input sequences; and perform decoding of each of the plurality of second input sequences to determine a final decoding result.

### [Advantageous Effects]

A decoding device and method according to an embodiment of the disclosure may generate at least two modified decoder input sequences based on an original decoder input sequence, perform decoding based on each of the generated modified decoder input sequences, and then aggregate the results to significantly improve decoding performance.

A decoding device and method according to an embodiment of the disclosure may reduce complexity by adjusting a search range when determining an element to be changed in the original decoder input sequence.

A decoding device and method according to an embodiment of the disclosure may improve error-correction performance of channel decoding.

In particular, a decoding device and method according to various embodiments of the disclosure may improve error-correction performance by determining an element to be changed in the original decoder input sequence, based on a decoder output sequence obtained after one decoding.

Advantageous effects obtainable from the disclosure are not limited to the above-mentioned effects, and other effects which are not mentioned herein will be clearly understood from the following description by those skilled in the art.

### [Brief Description of Drawings]

FIG. 1 illustrates a wireless communication system according to an embodiment of the disclosure.
FIG. 2 illustrates an example of the configuration of a transmission device and a reception device performing communication in a wireless communication system according to an embodiment of the disclosure.
FIG. 3 illustrates an example of a parity check matrix of a low-density parity-check (LDPC) code.
FIG. 4 illustrates a binary graph corresponding to the parity check matrix of FIG. 3.
FIG. 5 illustrates a block diagram of a transmission device performing channel encoding and a series of operations according to an embodiment of the disclosure.
FIG. 6 illustrates a block diagram of a reception device performing channel decoding and a series of operations according to an embodiment of the disclosure.
FIG. 7 illustrates a procedure of ensemble decoding in which a reception device selects a location of an LLR with low in an intrinsic log-likelihood ratio (LLR) sequence and performs decoding by generating a modified candidate LLR sequence based on the location.
FIG. 8 illustrates an example of a block diagram illustrating the order of operations of ensemble decoding.
FIG. 9 illustrates that a search range for a reception device to find the location of an LLR to change a value in a given intrinsic LLR sequence is the entire range excluding the location of an unpunctured bit.
FIG. 10 illustrates that a search range for a reception device to find the location of an LLR to change a value in a given intrinsic LLR sequence.
FIG. 11 illustrates an example of a search range for finding the location of an LLR to change a value in a given intrinsic LLR sequence including a systematic puncturing bit, according to an embodiment of the disclosure.
FIG. 12 illustrates an example of a search range for finding the location of an LLR to change a value in a given intrinsic LLR sequence not including a systematic puncturing bit, according to an embodiment of the disclosure.
FIG. 13 is a diagram illustrating an effect of achieving low complexity when a search range is determined in a 5G new radio (NR) LDPC code system according to an embodiment of the disclosure.
FIG. 14 is a diagram illustrating an effect of achieving error-correction performance when a search range is determined in a 5G NR LDPC code system according to an embodiment of the disclosure.
FIG. 15 illustrates a procedure of performing ensemble decoding based on an AP-LLR sequence obtained by decoding an intrinsic LLR sequence as an input, according to an embodiment of the disclosure.
FIG. 16 illustrates an example of a search range for determining a location of an LLR to change a value, based on an AP-LLR sequence according to an embodiment of the disclosure.
FIG. 17 is a diagram identifying and comparing the error-correction performance when determining the location of an LLR to change a value based on an AP-LLR with a different search range in a 5G NR LDPC code system according to an embodiment of the disclosure.
FIG. 18 is a diagram identifying and comparing the error-correction performance when determining the location of an LLR to change a value based on an intrinsic LLR sequence and an AP-LLR sequence in a 5G NR LDPC code system according to an embodiment of the disclosure.
FIG. 19 is a diagram identifying and comparing the error-correction performance when determining the location of an LLR to change a value based on an intrinsic LLR sequence and an AP-LLR sequence in a 4G LTE turbo code system according to an embodiment of the disclosure.
FIG. 20 is a flowchart illustrating an ensemble decoding operation of a channel code performed by a reception device according to an embodiment of the disclosure.
FIG. 21 is a flowchart illustrating an operation when a transmission device a base station and a reception device is a terminal, according to an embodiment of the disclosure.

### [Mode for Carrying out the Invention]

Hereinafter, embodiments of the disclosure will be described in detail in conjunction with the accompanying drawings.

In describing the embodiments, descriptions related to technical contents well-known in the relevant art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Also, the size of each element does not completely reflect the actual size. In the respective drawings, the same or corresponding elements are assigned the same reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference numerals designate the same or like elements.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions which execute on a computer or other programmable data processing apparatus to cause a series of operational steps to be performed on the computer or other programmable data processing apparatus to produce a computer implemented process may provide steps for implementing the functions specified in the flowchart block(s).

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card.

Hereinafter, various embodiments will be described with reference to the accompanying drawings. In the accompanying drawings, the same or like elements are designated by the same or like reference signa as much as possible. Also, it should be noted that the following accompanying drawings of the disclosure are provided to help an understanding of the disclosure and the disclosure is not limited to configurations or arrangements illustrated in the drawings of the disclosure. In addition, a detailed description of known functions or configurations that may make the subject matter of the disclosure unclear will be omitted. It should be noted that, in the following description of the disclosure, only parts necessary for understanding operations according to various embodiments of the disclosure will be described and descriptions of the other parts will be omitted so as not to make the subject matter of the disclosure obscure.

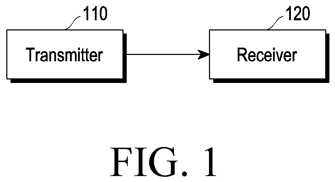

FIG. 1 illustrates a wireless communication system according to one embodiment of the disclosure.

FIG. 1 illustrates a transmitter 110 and a receiver 120 as parts of a device or a node using a wireless channel in a wireless communication system. Although FIG. 1 illustrates one transmitter 110 and one receiver 120, multiple transmitters or multiple receivers may be included. In addition, for the sake of description, the transmitter 110 and the receiver 120 are described as separate entities in the disclosure, but the functions of the transmitter 110 and the receiver 120 may be interchanged. For example, in an uplink of a cellular communication system, the transmitter 110 may be a UE, and the receiver 120 may be a base station. In the case of a downlink, the transmitter 110 may be a base station, and the receiver 120 may be a UE.

As an embodiment, the transmitter 110 may generate a codeword by encoding information bits based on a turbo code, and the receiver 120 may decode the signal of the received codeword based on the turbo code. For example, the receiver 120 may use a turbo decoding method according to an embodiment of the disclosure, and may perform a check using a concatenated CRC code to determine whether a decoding result is normal. The transmitter 110 and the receiver 120 perform encoding and decoding using the structure (such as a trellis, linear feedback shift register, etc.) of a turbo code known to each other. For example, the structure of the turbo code may include a trellis, a linear feedback shift register, etc. defined in the 3rd generation partnership project (3GPP) long-term evolution (LTE) standard.

As an embodiment, the transmitter 110 may generate a codeword by encoding information bits based on a low-density parity-check (LDPC) code, and the receiver 120 may decode a signal of a received codeword based on the LDPC code. For example, the receiver 120 may use the LDPC decoding method according to an embodiment of the disclosure, and may perform a syndrome check to determine whether the decoding result is normal. The transmitter 110 and the receiver 120 perform LDPC encoding and decoding by using a parity check matrix known to each other. For example, the parity check matrix may include a parity check matrix defined in the 3GPP NR standard.

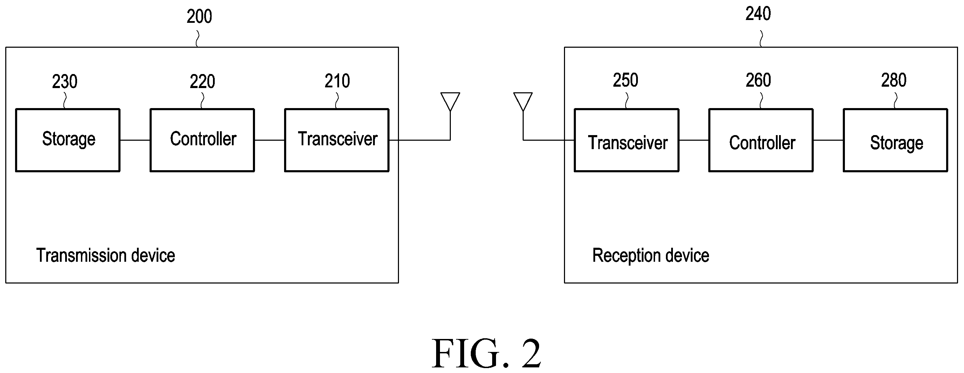

FIG. 2 illustrates an example of the configuration of a device performing communication in a wireless communication system according to an embodiment of the disclosure.

The configuration illustrated in FIG. 2 is for a transmission device 200 and a reception device 240, and may be understood as the configuration of the transmitter 110 and the receiver 120 illustrated in FIG. 1. As used herein, the terms "unit" and "module" refer to a unit for processing at least one function or operation, and may be implemented as hardware, software, or a combination of hardware and software.

Referring to FIG. 2, the transmission device 200 may include a transceiver 210, a storage 230, and a controller 220.

According to FIG. 2, the transmission device 200 includes the transceiver 210, the controller 220, and the storage 230. The transmission device 200 may be, for example, a UE or a base station. However, the components of the transmission device 200 are not limited to the above-described example but, for example, the transmission device 200 may include more components than the described components or may include fewer components. In addition, the transceiver 210, the controller 220, and the storage 230, etc. may be implemented in the form of a single chip.

The transceiver 210 may perform functions for transmitting and receiving signals through a wireless channel. For example, the transceiver 210 may perform a conversion function between a baseband signal and a bit string according to the physical layer specification of the system. For example, when transmitting data, the transceiver 210 may generate complex symbols by encoding and modulating a transmission bit string. In addition, when receiving data, the transceiver 210 may restore a reception bit string through demodulation and decoding of a baseband signal. In addition, the transceiver 210 may up-convert a baseband signal into a radio frequency (RF) band signal, transmit the same through an antenna, and down-convert the RF band signal received through the antenna into a baseband signal.

For this, the transceiver 210 may include a transmission filter, a reception filter, an amplifier, a mixer, an oscillator, a digital-to-analog converter (DAC), an analog-to-digital converter (ADC), and the like. In addition, the transceiver 210 may include multiple transmission/reception paths. Furthermore, the transceiver 210 may include at least one antenna array including multiple antenna elements. From the perspective of hardware, the communicator 210 may be composed of a digital unit and an analog unit, and the analog unit may be composed of multiple sub-units according to an operating power, an operating frequency, and the like. In addition, the communicator 210 may include a decoder to perform decoding according to various embodiments of the disclosure.

The transceiver 210 transmits and receives a signal as described above. Accordingly, the transceiver 210 may be referred to as a "transmitter", a "receiver", or a "communicator". In addition, in the following description, transmission and reception performed through a wireless channel are used in the sense that the processing described above is performed by the transceiver 210. In addition, when the device in FIG. 2 is a base station, the transceiver 210 may further include a backhaul communicator for communication with another network entity connected through a backhaul network.

The transceiver 210 may transmit and receive a signal to and from the transmission device 240. Here, the signal may include control information and data. To this end, the transceiver 210 may be composed of an RF transmitter that up-converts and amplifies the frequency of a transmitted signal, an RF receiver that low-noise amplifies a received signal and down-converts its frequency, and the like. However, this is merely an embodiment of the transceiver 210, and the components of the transceiver 210 are not limited to the RF transmitter and the RF receiver. In addition, the transceiver 210 may receive a signal through a wireless channel, output the same to the controller 220, and transmit a signal output from the controller 220 through the wireless channel. In addition, the transceiver 210 may separately include an RF transceiver for a first wireless communication technology and an RF transceiver for a second wireless communication technology, or may perform physical layer processing according to the first wireless communication technology and the second wireless communication technology by using a single transceiver.

The storage 230 may store programs and data necessary for the operation of the transmission device 200. In addition, the storage 230 may store control information or data included in a signal transmitted and received by the transmission device 200. The storage 230 may be composed of a storage medium such as a ROM, a RAM, a hard disk, a CD-ROM, and a DVD or a combination of storage media. In addition, there may be multiple storages 230.

The storage 230 may store data such as a basic program, an application program, and configuration information for the operation of the transmitter 110. The storage 230 may be composed of volatile memory, non-volatile memory, or a combination of volatile memory and non-volatile memory. In addition, the storage 230 may provide stored data in response to a request from the controller 220.

The controller 220 may control overall operations of the device. For example, the controller 220 may transmit and receive a signal through the transceiver 210. In addition, the controller 220 may write data to or read data from the storage 230. To this end, the controller 220 may include at least one processor or a microprocessor, or may be part of a processor. According to various embodiments, the controller 220 may control the device to perform operations according to the various embodiments described below.

According to FIG. 2, the reception device 240 includes the transceiver 250, the controller 260, and the storage 280. The reception device 240 may be, for example, a UE or a base station. However, the components of the reception device 240 are not limited to the above-described example but, for example, the reception device 240 may include more components than the described components or may include fewer components. In addition, the transceiver 250, the controller 260, and the storage 280, etc. may be implemented in the form of a single chip.

The transceiver 250 may perform functions for transmitting and receiving signals through a wireless channel. For example, the transceiver 250 may perform a conversion function between a baseband signal and a bit string according to the physical layer specification of the system. For example, when transmitting data, the transceiver 250 may generate complex symbols by encoding and modulating a transmission bit string. In addition, when receiving data, the transceiver 250 may restore a reception bit string through demodulation and decoding of a baseband signal. In addition, the transceiver 250 may up-convert a baseband signal into a radio frequency (RF) band signal, transmit the same through an antenna, and down-convert the RF band signal received through the antenna into a baseband signal.

For this, the transceiver 250 may include a transmission filter, a reception filter, an amplifier, a mixer, an oscillator, a digital-to-analog converter (DAC), an analog-to-digital converter (ADC), and the like. In addition, the transceiver 250 may include multiple transmission/reception paths. Furthermore, the transceiver 250 may include at least one antenna array including multiple antenna elements. From the perspective of hardware, the transceiver 250 may be composed of a digital unit and an analog unit, and the analog unit may be composed of multiple sub-units according to an operating power, an operating frequency, and the like. In addition, the transceiver 250 may include a decoder to perform decoding according to various embodiments of the disclosure.

The transceiver 250 transmits and receives a signal as described above. Accordingly, the transceiver 250 may be referred to as a "transmitter" or a "receiver". In addition, in the following description, transmission and reception performed through a wireless channel are used in the sense that the processing described above is performed by the transceiver 250. In addition, when the device in FIG. 2 is a base station, the transceiver 250 may further include a backhaul communicator for communication with another network entity connected through a backhaul network.

The transceiver 250 may transmit and receive a signal to and from the reception device 200. Here, the signal may include control information and data. To this end, the transceiver 250 may be composed of an RF transmitter that up-converts and amplifies the frequency of a transmitted signal, an RF receiver that low-noise amplifies a received signal and down-converts its frequency, and the like. However, this is merely an embodiment of the transceiver 250, and the components of the transceiver 250 are not limited to the RF transmitter and the RF receiver. In addition, the transceiver 250 may receive a signal through a wireless channel, output the same to the controller 260, and transmit a signal output from the controller 260 through the wireless channel. In addition, the transceiver 250 may separately include an RF transceiver for a first wireless communication technology and an RF transceiver for a second wireless communication technology, or may perform physical layer processing according to the first wireless communication technology and the second wireless communication technology by using a single transceiver.

The storage 280 may store programs and data necessary for the operation of the reception device 240. In addition, the storage 280 may store control information or data included in a signal transmitted and received by the reception device 240. The storage 280 may be composed of a storage medium such as a ROM, a RAM, a hard disk, a CD-ROM, and a DVD or a combination of storage media. In addition, there may be multiple storages 280.

The storage 280 may store data such as a basic program, an application program, and configuration information for the operation of the receiver 120. The storage 280 may be composed of volatile memory, non-volatile memory, or a combination of volatile memory and non-volatile memory. In addition, the storage 280 may provide stored data in response to a request from the controller 260.

The controller 260 may control overall operations of the device. For example, the controller 260 may transmit and receive a signal through the transceiver 280. In addition, the controller 260 may write data to or read data from the storage 280. To this end, the controller 260 may include at least one processor or a microprocessor, or may be part of a processor. According to various embodiments, the controller 260 may control the device to perform operations according to the various embodiments described below.

The at least one processor may control generation of a first input sequence, based on a bit encoded with a channel code received from a transmission device. The at least one processor may determine a search range of at least one element to be changed to generate multiple second input sequences from the first input sequence, based on the structure of the channel code. As an embodiment, the length of the search range may be shorter than the smaller of the length E of the encoded bit and the length N = NbZ of a mother code.

As an embodiment, the determining a search range of at least one element by the reception device may include performing decoding on the first input sequence, identifying a first output sequence generated or updated based on the decoding, and determining a search range of the at least one element based on the first output sequence. As an embodiment, the search range of the at least one element may be predetermined. As an embodiment, when determining the search range of the at least one element based on the first output sequence, the reception device may, when the first output sequence is updated, determine the search range of the at least one element based on one of the locations of the updated elements in the first output sequence, the location of an updated information bit in the first output sequence, and the location of an updated systematic puncturing bit in the first output sequence.

As an embodiment, the search range may be determined based on an information bit, a punctured bit within the information bit, and a shortened bit within the information bit. As an embodiment, the length of the search range may be a value K-2Z-F obtained by subtracting the length 2Z of a punctured bit in the information bit and the length F of a shortened bit in the information bit from the length K of the systematic part.

The at least one processor may determine at least one element used to generate the at least one second input sequence, based on the search range. As an embodiment, when the first input sequence is an LLR sequence, determining at least one element used by the reception device to generate the at least one second input sequence may include determining at least one element of n predetermined elements having low reliability values.

The at least one processor may generate the at least one second input sequence by changing the at least one element. As an embodiment, generating the at least one second input sequence by the reception device may include generating 2n of the multiple second input sequences by changing at least one element of the n determined elements from the first input sequence.

The at least one processor may perform decoding on each of the at least one second input sequence and determine a final decoding result.

As an embodiment, the reception device may receive information necessary for the decoding from the transmission device, and the first input sequence may be decoded based on the information necessary for the decoding. As an embodiment, when the reception device is a UE and the transmission device is a base station, the information necessary for the decoding may be transmitted through a higher layer message.

The disclosure describes various embodiments by using terms used in some communication standards (e.g., 3GPP). However, this is merely an example for the purpose of description. Various embodiments of the disclosure may be easily modified and applied to other communication and broadcasting systems.

In addition, in the process of describing the disclosure in detail, commonly used mathematical symbols are used to avoid ambiguity in the meaning. Such mathematical symbols will be clearly understood by those skilled in the art to which the disclosure pertains. Typically, the following mathematical symbols generally known in the art are used in the disclosure.
- A calligraphic character (e.g., 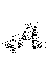 ) is used to indicate a set.
- Throughout this disclosure, unless otherwise noted, it is assumed that the index of the first element of a set, sequence, or vector starts from 0 (zero-based numbering).
- For a set 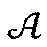 = 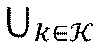 {*aₖ*} of indexed elements, 〈 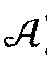 〉 denotes an index set 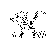 of the elements. For example, 〈 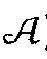 〉*=*{3,4,7,8} for 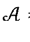 = {*a*₃, *a*₄*, a*₇*, a*₈}.
- For two sets 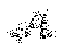 and 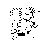 , 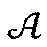 \ 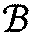 denotes the relative complement of the set 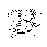 with respect to the set 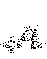 .
- For the set 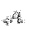 and an arbitrary number 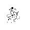 , 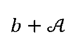 denotes a set {*a + b* | *a* ∈ 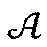 } composed of values obtained by adding 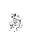 to all the elements of 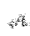 .
- The symbols 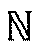 , 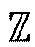 , 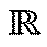 are used to indicate the set of natural numbers, the set of integers, and the set of real numbers, respectively.
- ${F}_{2} = \left\{0, 1\right\}$ denotes a binary field.
- For a non-negative integer 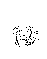 , ${ℤ}_{n}$ denotes a set of consecutive 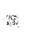 integers from 0 to *n* - 1 . That is, ${ℤ}_{n} = \left\{0,1,…,n-1\right\}$ .
- Boldface lowercase (e.g., 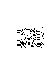 ) is used to indicate a vector, and boldface uppercase (e.g., 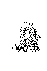 ) is used to indicate a matrix. A vector denotes a column vector, unless otherwise specified.
- For the vector 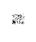 and the matrix 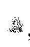 , 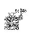 and 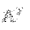 represent their respective transposes.
- For the matrix 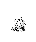 and two non-negative integers *i, j,* (A)*_{i,j}* denotes an element at 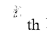 row and 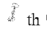 column of the matrix 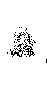 .
- For the matrix 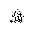 and two non-negative integer sets 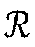 , 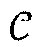 , 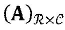 denotes a submatrix composed of rows specified by elements of the set 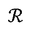 and columns specified by elements of the set 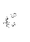 in the matrix 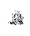 .

In a wireless communication system, the error detection code and error correction code (ECC) are used to overcome, by a receiver, errors that may occur by a communication channel. The error correction code used for communication between a transmitter and a receiver is also generally referred to as channel coding or forward error correction (FEC). The transmitter encodes an information vector to be transmitted, generates a codeword vector, and transmits the same, and the receiver estimates the information vector by decoding the received signal after a series of processes.

Various channel coding techniques are used in communication and broadcasting systems. Channel coding techniques currently used include a convolutional code, a turbo code, a low-density parity-check (LDPC) code, a polar code, and the like. The turbo code and LDPC code are channel coding techniques that perform iterative decoding and have particularly excellent performance when the code length is long, and are used in various communication and broadcasting systems.

The turbo code is the first channel coding technique to demonstrate that a performance close to the channel capacity may be achieved by using a decoding algorithm with realistic complexity. The turbo code system performs decoding in which two component decoders, called as turbo processing, iteratively exchange messages, and such decoding illustrates excellent performance particularly when processing long-length information and a codeword vector. Due to these advantages, the turbo code is being used in processing information of a data channel of 3_{rd} Generation Partnership Project (3GPP) and 4ₜₕ Generation (4G) Long-Term Evolution (LTE).

The LDPC code is also a channel coding technique that is known to achieve performance close to the channel capacity by using a decoding algorithm of realistic complexity. In particular, decoding referred to as belief-propagation (BP) is suitable for parallelizing each detailed operation, and is therefore advantageous for achieving a high throughput. Due to such advantages, LDPC codes are used in various communication and broadcasting systems such as IEEE 802.11n/ad Wi-Fi, DVB-T2/C2/S2, and ATSC 3.0, and have recently been adopted and used in a 5G mobile communication system, that is, a 3GPP New Radio (NR) system in particular.

The turbo code and low-density parity-check (LDPC) code are error correction codes that exhibit performance close to the channel capacity. The turbo codes and LDPC code are used in various communication and broadcasting systems due to their excellent performance and implementation-friendly characteristics. Typically, the turbo code is used in the 4ₜₕ generation (4G) long-term evolution (LTE) mobile communication system standard of 3GPP, and the LDPC code is used in the 5ₜₕ generation (5G) new radio (NR) mobile communication system standard of 3GPP.

Hereinafter, embodiments of the disclosure will be described based on a communication or broadcasting system using an LDPC code. However, this is merely an example for the sake of avoiding the description of parts that may be redundantly described for each different channel coding technique and simplifying the description. The various embodiments described herein may be easily modified and applied to communication and broadcasting systems that use other channel coding techniques as well as the turbo code.

First, the features of an LDPC code as a channel coding technique are described. The LDPC code is a linear code, and each LDPC code is generally defined by a parity-check matrix. The number of input bits to be encoded using an LDPC code is denoted as 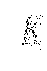 , and the number of output bits of the encoding result is denoted as 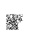 . In the field of coding theory, the number of input bits 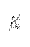 of encoding is referred to as a code dimension, and the number of output bits 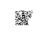 of encoding is referred to as a code length. The code rate, which is one of the important characteristics of a channel code, is defined as *R = K*/*N,* and the value *M = N - K* obtained by subtracting the code dimension from the code length is referred to as the number of parity bits and the number of redundant bits.

The LDPC code with code dimension 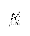 and code length 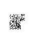 is defined by a parity-check matrix $H ∈ {F}_{2}^{M \times N}$. All valid codeword vectors $x ∈ {F}_{2}^{N}$ generated by the LDPC code defined by the parity-check matrix 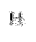 satisfy the relationship in Equation 1 below.${Hx}^{T} = 0$

In Equation 1, O is a zero vector of length M. According to Equation 1, the codeword vector X generated by encoding with an LDPC code defined by a parity check matrix is the null space of the parity check matrix H. Let ${h}_{j} ∈ {F}_{2}^{N}$ be the row vector corresponding to the 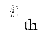 row of 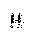 , and let ${h}_{ji} ∈ {F}_{2}$ be the element of the 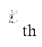 row and 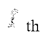 column of 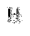 . Encoding and decoding of the LDPC code are based on the parity check matrix 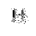 .

The general operation of the LDPC code defined by the parity check matrix 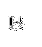 will be described in detail with reference to the drawings. The decoding of the LDPC code may be understood as a so-called belief-propagation (BP) process of iteratively exchanging messages in a bipartite graph corresponding to the parity check matrix 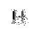 .

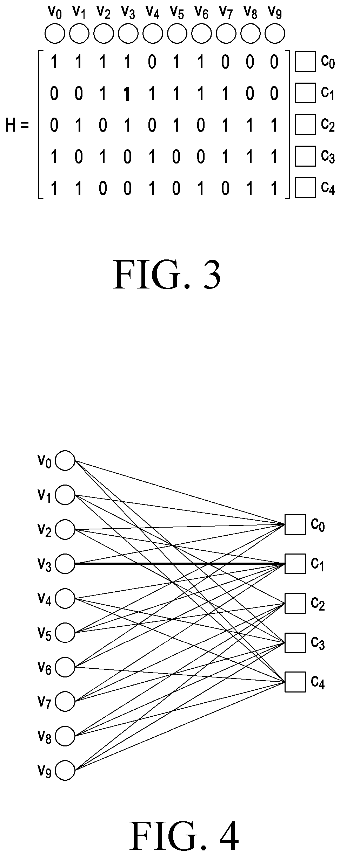

FIG. 3 illustrates an example of a parity check matrix of a low-density parity-check (LDPC) code.

FIG. 3 illustrates an example of a parity check matrix $H ∈ {F}_{2}^{5 \times 10}$ of a binary LDPC code with *M = N - K =* 5 rows and 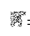 =10 columns. The number of 1s in the parity check matrix is referred to as density, and this density determines the computational complexity of encoding and decoding. The density of a general parity check matrix of an LDPC code is very low relative to the total size *NM* of the parity check matrix, and this feature is the reason why this code class is referred to as a low-density parity check (LDPC) code. However, it should be noted that the parity check matrix in FIG. 3 is an example of an LDPC code with very small 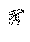 and *M*, and therefore has a relatively high density. Typically designed LDPC codes have 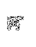 and *M* larger than the example in FIG. 3, and the density of the parity check matrix is much lower.

FIG. 4 illustrates a binary graph corresponding to the parity check matrix of FIG. 3.

FIG. 4 illustrates a bipartite graph 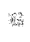 formed when the parity check matrix 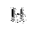 of Fig. 3 is considered as a binary adjacency matrix. The bipartite graph 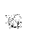 is composed of a variable node set *V* ( |*V*| *= N*)*,* a check node set 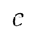 ( | 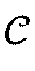 | *= N - K* ), and a connecting line (edge) set 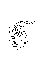 that connects the elements of the two sets. According to the conventional expression of graph theory, (*vᵢ*,*cⱼ*) ∈ *ε* indicates that 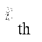 variable node *vᵢ* ∈ *v cⱼ* ∈ 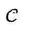 and 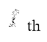 check node *cⱼ* ∈ 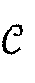 are connected. Conversely, (*vᵢ*, *cⱼ*) ∉ *ε* indicates that the 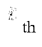 variable node *vᵢ* ∈ *V cⱼ* ∈ 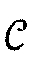 and the 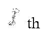 check node *cⱼ* ∈ 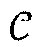 are not connected. For the parity check matrix 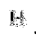 , if the value of the element *hⱼᵢ* in the 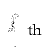 row and 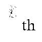 column is 1, then (*vᵢ, cⱼ*) ∈ *ε ,* and if the value of *hⱼᵢ* is 0, then (*vᵢ, cⱼ*) ∉ *ε* .

Variable nodes correspond to each bit of the codeword output vector $x ∈ {F}_{2}^{N}$, and the 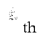 variable node *vᵢ* ∈ *V* corresponds to the 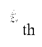 codeword bit *xᵢ* with the same index. The check node represents a linear equation represented by the inner product of each row of the parity check matrix 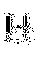 and the binary field of the codeword vector 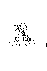 . Specifically, the 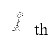 check node *cⱼ* ∈ 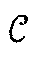 represents a linear equation corresponding to ${h}_{j} ⋅ x = {\sum }_{i = 0}^{N - 1} {h}_{ji} {x}_{i} = 0$. This linear equation indicates that the binary sum (modulo-2 sum, or bitwise-XOR with the same meaning) of the bit values corresponding to all variable nodes connected to the 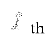 check node on the bipartite graph given by 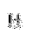 results in 0. The belief-propagation (BP) decoding of an LDPC code may be understood as an iterative message passing process that uses the relationship between variable nodes and check nodes in this graph.

LDPC codes are being used in various communication and broadcasting systems, and are being designed and used to satisfy requirements given according to the characteristics of the system.

For example, one of the required characteristics of a channel code for a communication system is the flexibility of the code length. In a communication system, the number of information bits to be transmitted may vary for each transmission, depending on the message to be transmitted. When transmitting multimedia information, such as a video, the number of information bits may be large. Conversely, when transmitting text message, the number of information bits may be small. In addition, in a communication system, the amount of communication resources, such as time and frequency available for transmitting specific information may vary for each transmission for various reasons. For example, the amount of the entire available communication resources may vary, or the amount of a communication resources allocated for transmitting corresponding information in the entire available communication resources may vary. Since the number of bits to be transmitted varies at each transmission time, a channel code used for a communication system should be designed to flexibly process encoding and decoding in a situation where the number of input bits and the number of output bits of encoding change variably.

Another required characteristic of a channel code for a communication system is rate flexibility. In a communication system, especially in a mobile communication system, the channel quality between the transmitter and the receiver changes from time to time. For example, when a receiver is physically moved, the distance between the transmitter and the receiver may change, and thus a channel environment such as a path loss and a multi-path fading may differ. In the case of a good channel quality, the transmitter may increase the code rate (i.e., reduce the number of parity bits) to achieve error-free encoding/decoding through efficient use of communication resources. Conversely, in the case of a poor channel quality, the transmitter may lower the code rate (i.e., increase the number of parity bits) to increase the probability of overcoming the poor channel. Therefore, a channel code used in a communication system should be designed to flexibly change the code rate as needed.

The LDPC code for a practical communication and broadcasting system is designed to have the above-mentioned required characteristics (flexible code length adjustment, flexible code rate matching). As an example, in a 3GPP NR mobile communication system, an LDPC code satisfying the above-mentioned required characteristics has been designed and is being used.

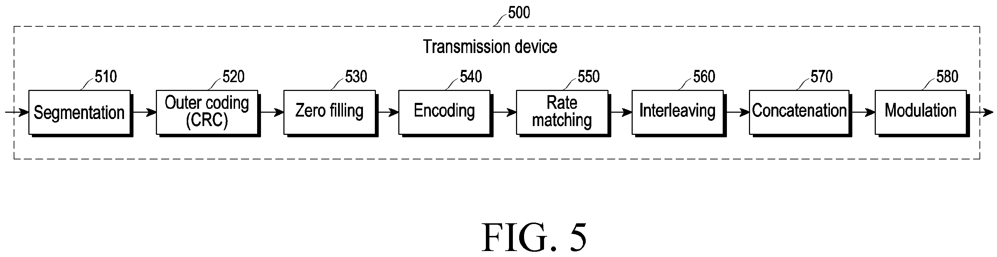

FIG. 5 is a block diagram illustrating a transmitter 500 according to an embodiment of the disclosure. Referring to FIG. 5, the transmission device 500 may include a segmentation unit 510, an outer encoding unit 520, a zero-filling unit 530, an LDPC encoding unit 540, a code rate-matching unit 550, an interleaving unit 560, a concatenation unit 570, and a modulation unit 580 in order to transmit an input bit sequence after LDPC encoding and modulation. Examples of the modulation method include a binary phase shift keying (BPSK), BPSK, a quadrature phase shift keying (QPSK), a 16-quadrature amplitude modulation (16-QAM), a 64-QAM, a 256-QAM, a 1024-QAM, and the like, and any other modulation technique may also be used. The components illustrated in FIG. 5 are components for encoding and modulating an input bit sequence, and the illustration is merely an embodiment, and some of the components illustrated in FIG. 5 may be omitted or changed as appropriate, and other components may be added.

The transmitter 500 determines code parameters to be used for an LDPC code, based on given scheduling parameters such as the number of input bits, the number of final output bits, and a code rate, which is a relationship therebetween, for encoding and modulation. The code parameter may include a parity check matrix of an LDPC code to be used and information on the same, information for segmentation, information for code rate matching (shortening, puncturing, iteration, etc.), information for bit interleaving, information for modulation, and the like.

The information bits to be transmitted by the transmission device 500 may be referred to as a transport block (TB). Accordingly, the number of bits in a transport block may be referred to as a transport block size (TBS). The transport block may be a result obtained encoding with an outer concatenation code, such as the cyclic redundancy check (CRC) code mentioned earlier.

In a general communication system, the number of bits to be transmitted, i.e., TBS (or the sum of the number of parity bits generated by the TBS and outer concatenated codes), varies depending on the situation. If the TBS is larger than the maximum number of input bits that may be encoded by the determined parity-check matrix 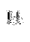 , the transport block may be divided into two or more code blocks (CB), i.e., segmented (510). Each segmented code block is input to a single LDPC encoder. If the number of input bits is equal to or less than a preconfigured value, segmentation is not performed. The number of code blocks determined or calculated by the above process is denoted as 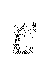 . For index *r* = 0, ... , *C*-1, the 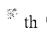 code block is denoted as ${a}_{r} ∈ {F}_{2}^{{A}_{r}}$, where 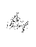 represents the length of the corresponding code block.

Each segmented code block may be encoded with a concatenated outer encoding unit 520. Outer codes include CRC encoding and are not restricted to any specific coding technique. Whether to perform an outer encoding and the type of the outer code may be determined differently depending on whether segmentation has been previously performed. Outer encoding may be used to assist the decoding operation of the LDPC code performed by the receiver and to improve performance. Outer coding may be used to identify and check the validity of the result of decoding the LDPC code performed by the receiver. The outer codeword obtained by encoding the 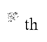 code block a*ᵣ* is written as a vector ${b}_{r} ∈ {F}_{2}^{{B}_{r}}$, where 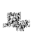 represents its length (*Bᵣ* ≥ *Aᵣ*)*.* If outer encoding is not performed, b*ᵣ* = a*r* . For consistency, the result obtained by substituting b*ᵣ* = a*ᵣ* , even if outer encoding is not performed, is referred to as the outer codeword. The bit sequence generated as described above is input to an LDPC encoder.

The outer codewords for each code block are LDPC encoded independently. Therefore, understanding how a code block is processed allows one to understand the entire processing process of the transmission device. Therefore, the LDPC encoding process for a single code block will be described below. For the sake of brevity in expression, the subscript 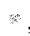 , which indicates the index of the code block, is dropped, and the code block is written as $a ∈ {F}_{2}^{A}$, and the outer codeword resulting from its outer encoding is written as $b ∈ {F}_{2}^{B}$.

The outer codeword $b ∈ {F}_{2}^{B}$ of the outer encoded length 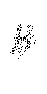 is encoded into an LDPC code of the code dimension 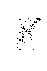 . The LDPC code to be used for encoding may be selected such that the code dimension 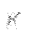 of the code is as close as possible to the length and is greater than or equal to the length. If the length 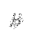 of the outer codeword is smaller than the code dimension 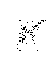 , *F = K - B* filler bits may be added to the code input bit sequence. If the length 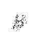 of the outer codeword is equal to the code dimension 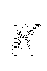 , the number of filler bits becomes *F = K - B =* 0*.* The filler bits may be added to the outer codeword 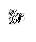 in various ways and, for example, an appending method of adding *F = K - B* filler bits to the end of 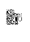 may be used. This filler bit addition method is not limited to a specific method. The filler bits may be determined to have an arbitrary fixed value, and are generally determined to have a fixed bit value of 0. For this reason, the process of adding the filler bits is also referred to as zero filling, zero padding, or zero appending 530. Since filler bits have no value as actual information, they may be excluded from the final transmission. The process of excluding the filler bits from the final transmission may be understood as shortening, which is one of the code modification methods that reduce the code length and the code dimension by the same size. The encoder input vector represents the result of performing operations such as zero filling on the outer codeword so as to adjust the length to the code dimension of the LDPC code to be used for encoding. The filler bit may also be referred to as a shortened bit, and the term "shortened bit" is used below.

After matching the input length 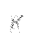 of the LDPC encoding, LDPC encoding is performed (540). LDPC encoding is performed based on a parity check matrix $H ∈ {F}_{2}^{M \times N}$ determined by the scheduling parameter, code parameter, and the like. Specifically, the LDPC encoding is a process of generating a mother codeword vector $x ∈ {F}_{2}^{N}$ of length 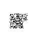 that satisfies Equation 1, based on the encoding input vector 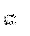 given through the above-described series of processes. In other words, the encoding is a process of obtaining a mother codeword vector 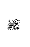 that satisfies Equation 1 and maps to the encoding input vector 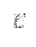 based on the parity check matrix 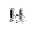 . If the bit sequence of the input code block appears exactly as it is in the mother codeword bit sequence, it is called a systematic code, and if not, it is called a non-systematic code.

An output of the LDPC encoding generates a mother codeword vector 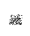 of length 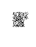 , and this mother codeword is transformed to match the transmission environment and transmission resources through a code rate-matching process 550. The length of the coded bit sequence to be finally transmitted for the corresponding code block is called the code rate-matching size 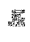 , which is a parameter determined by scheduling, such as the transmission environment and transmission resources. As with the other symbols mentioned above, the code rate-matching size of the 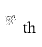 code block is written as 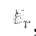 , however, since this deals with the encoding process of a single code block, it should be noted that for the sake of brevity, the subscript 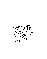 is omitted and it is written as 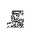 . The code rate-matching process may be understood as a process of generating a codeword vector $e ∈ {F}_{2}^{E}$ of length 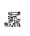 from a mother code vector 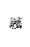 of length 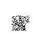 . A codeword vector 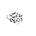 is also sometimes referred to as a transmitted codeword vector in order to distinguish it more clearly from a mother codeword vector 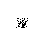 .

The code rate-matching process may be implemented in various ways, and for example, it may be systematically performed through a simple rule by using a circular buffer. The size of the circular buffer to be used is denoted as *N*_{CB} , and the *N*_{CB} may be different from the length 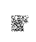 of a mother codeword. Usually, *N*_{CB} is determined to be a value equal to or smaller than 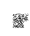 . As an example, in a 3GPP NR LDPC encoding system, if there is no special constraint, the *N_{CB}* is determined as *N -* 2*Z* (wherein 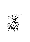 is a lifting size to be described later, which is a positive integer between 2 and 384). If the circular buffer of length *N_{CB}* is $d = \left({d}_{0},{d}_{0},…,{d}_{{N}_{cb} - 1}\right) ∈ {F}_{2}^{{N}_{cb}}$, each bit of the circular buffer is determined as a bit of a mother code x = (*x*₀*, x*₁, *..., x*_{*N-*1}) in Equation 2 below.${d}_{i} = {x}_{2 Z + i} , i = 0 , 1 , … , {N}_{cb} - 1$

When the circular buffer 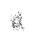 is configured as shown in Equation 2, the first 2*Z* bits of the mother codeword 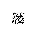 are not stored or written to the circular buffer and are therefore excluded from transmission. The 3GPP NR LDPC code is a systematic code, and in a mother code of length 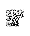 , the first 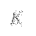 bits of the mother code contain the encoding input bit sequence (i.e., the information bit sequence) as is. Therefore, in the 3GPP NR LDPC encoding system, systematic puncturing or information puncturing occurs, in which 2*Z* bits of the information bits are fixedly punctured. In this way, instead of transmitting fewer information bits, the parity bits generated during the encoding process are transmitted by that amount.

The code rate-matching unit selects 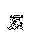 bits by reading the circular buffer 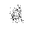 configured as above sequentially (in a method like *dₛ, d*_{*s+*1}*, d*_{*s+*2}*, ...* ) and cyclically ( 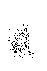 moves to the beginning *d*₀ of the buffer when it is reached the end *d_{N_{CB-1}}* of the buffer) from a predetermined starting point 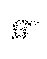 . The starting point 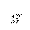 for reading the circular buffer may be determined by considering the use of Hybrid Automatic Repeat reQuest (HARQ). In addition, when selecting 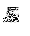 bits from the circular buffer, the 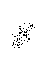 short bits added in process 530 are not selected. If the code rate-matching bit is *E* < *N_{CB} - F* , puncturing occurs in which (*N*_{CB} - *F*) - *E* bits of the codeword bits, excluding the shortened bits written to the circular buffer, are excluded from transmission. If *E* > *N*_{CB} - *F*, repetition occurs in which all or part of the codeword bits written to the circular buffer are transmitted two or more times.

The bit sequence of length 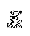 generated by the code rate matching may be transmitted through a bit interleaved coded modulation (BICM) technique, and in this case, interleaving 560 may be performed on the code rate-matched bit sequence to appropriately map bits to modulation symbols.

When the transport block is segmented into two or more code blocks, concatenation 570 of the series of outputs of the encoding processes for each code block may be performed. Here, the results of each code block may be simply concatenated sequentially, or the results of the code blocks may be concatenated while being mixed according to a predetermined pattern.

After all bit-unit operations are performed, a baseband signal to be transmitted through modulation 580 is generated. In the modulation process, various additional operations for the reception device to effectively demodulate and restore a signal may be performed. The baseband signal may be transmitted by being carried on a carrier of a band to be used for transmission. Through the above series of operations, the bits of the transport block are encoded and modulated and then transmitted.

Meanwhile, although functional configurations for LDPC encoding have been described in FIG. 5, the transmission device 500 may further include configurations for controlling the operation of the transmission device depending on the case.

According to an embodiment, the transmission device 500 may further include a transceiver. The transceiver performs functions for transmitting and receiving a signal through a wireless channel. For example, the transceiver performs a conversion function between a baseband signal and a bit according to a physical layer standard of a system. For example, when transmitting data, the transceiver generates a complex symbol by encoding and modulating a transmission bit string. In addition, when receiving data, the transceiver restores a reception bit string through demodulation and decoding of the baseband signal. In addition, the transceiver up-converts a baseband signal to a radio frequency (RF) band signal and then transmits the RF band signal through an antenna, and down-converts the RF band signal received through the antenna to a baseband signal. When following various embodiments, the transmission device 500 may transmit an LDPC-encoded signal to the reception device 600 described below.

To this end, the transceiver may include a transmission filter, a reception filter, an amplifier, a mixer, an oscillator, a digital-to-analog converter (DAC), an analog-to-digital converter (ADC), and the like. In addition, the transceiver may include multiple transmission/reception paths. Furthermore, the transceiver may include at least one antenna array including a plurality of antenna elements. In terms of hardware, the communication unit may be composed of a digital unit and an analog unit, and the analog unit may be composed of multiple sub-units depending on operating power, operating frequency, etc.

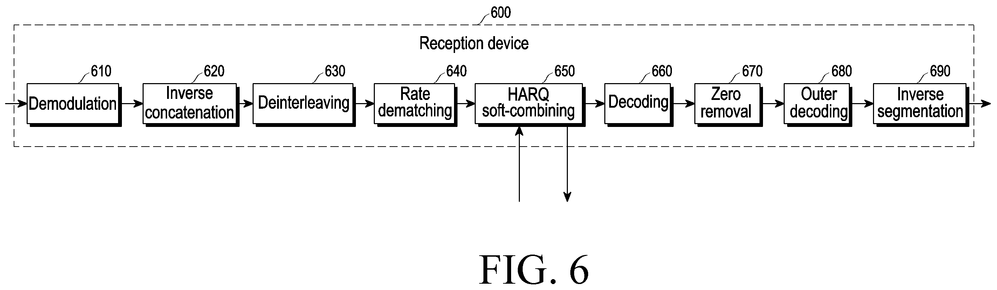

FIG. 6 illustrates a block diagram of a reception device performing channel decoding and a series of operations according to an embodiment of the disclosure.

Referring to FIG. 6, a reception device 600 may include a demodulation unit 610, an inverse concatenation unit 620, a deinterleaving unit 630, a code rate-dematching unit 640, a HARQ concatenation unit 650, an LDPC decoding unit 660, a zero removal unit 670, outer decoding 680, and inverse segmentation 690 to estimate accurate information bits from a received signal.

Like the transmission device 500, the reception device 600 also identifies or determines various parameters required for a reception operation, based on scheduling information, a code parameter, and the like. A series of processes performed by the following receiver are performed based on various parameters identified and determined as such.

The operation of the demodulation unit 610 may include multiple processes depending on the case. For example, the operation of the demodulation unit 610 may be subdivided into a process of obtaining a channel estimation result based on a received signal and a soft demapping process of determining values required for forward error control (FEC) decoding corresponding to the transmitted codeword bits from the demodulated signal or symbol based on the channel estimation result (e.g., log-likelihood ratio (LLR) or a corresponding value, etc.). In this case, the operation within each demodulation unit may be subdivided into each channel measurement block, soft demapping block, etc. Of course, more detailed subdivisions are also possible depending on the structure of the system.

Hereinafter, the operation of the reception device 600 that calculates and processes an LLR value of a codeword bit will be described. However, a metric value processed by the reception device is not limited to an LLR, and any value equivalent thereto may be used.

If the signal transmitted from the transmission device 500 is configured to include two or more code blocks, an inverse concatenation 620, which is the inverse process of the concatenation 570 performed by the transmission device, may be performed to distinguish the LLRs for each code block. If the number of code blocks is one, inverse concatenation is not performed. Through this process, an LLR sequence for each code block is obtained, and the length of the LLR sequence for the 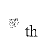 code block becomes the code rate matching size 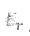 . As with the description of the transmission device 500 above, the following describes a series of decoding processes performed by the reception device 600 for one code block, and for brevity of expression, the code rate matching size may be written as 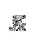 excluding the subscript 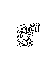 .

If the transmission device 500 performs interleaving 560, the reception device 600 performs deinterleaving 630, which is the inverse process thereof. This process is a process of changing the order of the LLR sequence of a code block into a predetermined pattern, and the sequence length 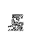 is not changed. The LLR sequence obtained by performing inverse concatenation and deinterleaving in this way is denoted as Ψ = (*ψ*₀,*ψ*₃, ...,*ψ*_{*E-*1}) *.*

Next, an LLR sequence value or a value equivalent thereto for a codeword that may be processed by an LDPC decoder is obtained by performing code rate dematching 640 as the inverse process of the code rate matching 550. That is, the code rate-dematching unit generates an LLR sequence Λ= (λ₀*,λ*₁*,* ..., *λ*_{*N*_{cb}-1}) for the mother code based on the sequence Ψ = (*ψ*₀,*ψ*₁, ..., *ψ*_{*E*- 1}) given by the previous process. The 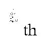 LLR 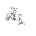 is for the mother codeword bit 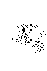 .

As an example, in a 3GPP NR LDPC encoding system, when a code rate matching is performed by using a circular buffer, code rate dematching may be performed in the following process to generate an LLR sequence for the mother code.
1) All values of the LLR sequence Λ= (*λ*₀, *λ*₁, ..., *λ*_{*N*_{cb}-1}) for the mother code are initialized to 0.
2) A location index for the code rate-dematching LLR sequence 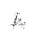 is configured as *i* = *s* . The buffer start location 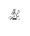 is a value that the transmitter/receiver may mutually identify through a series of processes as a scheduling parameter. In addition, the location index for the input LLR sequence Ψ is configured as *j =* 0.
3) The value of 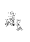 is determined by performing one of the following operations based on the processing of the mother codeword bit determined by the encoding process performed by the transmitter.
   - If 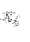 is shortened (a shortened bit with a value of 0) at the transmitter 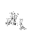 , is determined as the LLR value indicating the maximum probability of the bit value being 0, or a value equivalent thereto. Then, is incremented as *i* = *i* + 1, and is left as is.
   - If is not a shortened bit, is determined as *λᵢ = λᵢ + ψⱼ.* That is, *ψⱼ* is accumulated in the existing value of . If the decoder performs a fixed-point operation, an appropriate saturation or clipping operation may be performed to prevent overflow. Then, 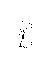 is incremented as *i* = *i +* 1 and 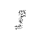 is incremented as *j* = *j* + 1.
4) If the index 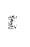 for the code rate-dematching LLR sequence becomes *N*_{cb} (reaches the end), it is changed to *i* = 0. Then, the process of 3) above is repeated. Such iterative operations are performed until all LLRs of the input LLR sequence are reflected in the code rate-dematching LLR sequence 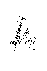 , that is, until 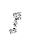 becomes 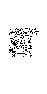 .

An LLR sequence Λ = (*λ*₀, *λ*₁, ..., *λ*_{Ncb-1}) for a circular buffer is obtained through the code rate-dematching process. As a result of the above series of processes, the LLR of the shortened bit location is determined as an LLR value indicating that the probability of a bit value of 0 is maximum, or a value equivalent thereto. Since no value is accumulated in the LLR of the punctured bit location, the initial value remains 0, which indicates that the probability of bit 0 and bit 1 is equal at 0.5, and neither is biased.

According to the operation of the decoder in the above embodiment, the code rate-dematching LLR sequence Λ = (*λ*₀*, λ*₁*,* ... , *λ*_{*N-*1}) of length 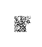 including up to 2Z systematically punctured LLRs may be generated. In this case, the code rate-dematching process may be modified and performed as follows.
1) All values of the LLR sequence Λ = (*λ*₀*, λ*₁*, ..., λ*_{*N-*1}) for the mother code are initialized to 0.
2) A location index for the code rate-dematching LLR sequence 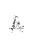 is configured as *i = s +* 2*Z* . The buffer start location 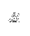 is a value that the transmitter/receiver may mutually identify through a series of processes as a scheduling parameter. In addition, the location index for the input LLR sequence Ψ is configured as *j* = 0.
3) The value of 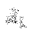 is determined by performing one of the following operations based on the processing of the mother codeword bit determined by the encoding process performed by the transmitter 500.
   - If is sho 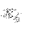 rtened (a shortened bit with a value of 0) at the transmitter, 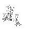 is determined as the LLR value indicating the maximum probability of the bit value being 0, or a value equivalent thereto. Then, is incremented as *i* = *i* + 1, and is left as is.
   - If is not a shortened bit, is determined as *λᵢ = λᵢ + ψⱼ.* That is, *ψⱼ* is accumulated in the existing value of . If the decoder performs a fixed-point operation, an appropriate saturation or clipping operation may be performed to prevent overflow. Then, 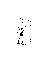 is incremented as *i* = *i +* 1, and 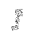 is incremented as *j = j* + 1.
4) If the index 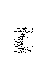 for the code rate-dematching LLR sequence becomes *N*_{cb} (reaches the end), it is changed to *i =* 2*Z* . Then, the process of 3) above is repeated. Such iterative operations are performed until all LLRs of the input LLR sequence are reflected in the code rate-dematching LLR sequence 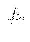 , that is, until 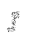 becomes 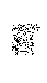 .

The following describes subsequent operations assuming that the code rate-dematching LLR sequence is generated without including an LLR for a systematic puncturing bit. That is, the code rate-dematching LLR sequence is assumed to have been obtained as Λ = (*λ*₀*,λ*₁*, ..., λ*_{*N_{cb-}*1}) . If a systematic puncturing bit is considered, it is sufficient to consider the prepending of 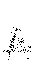 of the length *N*_{cb}, where 2Z values of zero are attached. Therefore, the selection of a single assumption for the sake of brevity in the above explanation does not make a difference to the final decoding result.

In a mobile communication system, a hybrid automatic repeat request (HARQ) operation may be performed to guarantee the integrity of data and to efficiently use the entire communication transmission resource. In this case, the reception device operates the HARQ LLR sequence Λ^{HARQ} = (*λ*₀,*λ*₁, ..., λ_{*N*_{cb}-1}) for each code block by using separate memory or the like. In addition, the reception device performs the soft-combining 650 regarding following HARQ, based on Λ^{HARQ} = (λ₀, λ₁, ...,λ_{*N*_{cb}-1}) and ${Λ}^{HARQ} = \left({λ}_{0}^{HARQ},{λ}_{1}^{HARQ},…,{λ}_{{N}_{cb} - 1}^{HARQ}\right)$.
- If this transmission is an initial transmission, Λ^{HARQ} is determined as 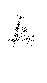 . That is, for all *i =* 0,1, ..., *N*_{cb} - 1 , the substitution of ${λ}_{i}^{HARQ} ← {λ}_{i}$ is performed. The elements of the code rate-dematching LLR sequence 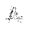 are not separately updated.
- If this transmission is a retransmission (second transmission) or a subsequent transmission, the elements at the respective locations of Λ_{HARQ} and 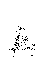 are added together. That is, an element-wise addition is performed between the two vectors. Specifically, for all *i =* 0,1, ..., *N_{cb} -* 1 , 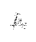 is updated in the manner of ${λ}_{i} ← {λ}_{i} + {λ}_{i}^{HARQ}$. The Λ_{HARQ} may be updated by considering various forms of memory operation, but typically Λ_{HARQ} may be updated to 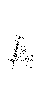 (i.e., for all *i =* 0,1, ..., *N*_{cb} - 1 , assigned to ${λ}_{i}^{HARQ} ← {λ}_{i}$ ) and written back to the corresponding memory.

If there is no HARQ operation, the above process may be omitted.

The LDPC decoder receives the LLR sequenceΛ = (*λ*₀, *λ*₁, ..., *λ*_{*N*_{cb}-1}) generated by the above series of processes and performs decoding 660. As described above, the input LLR sequence may be a sequence including LLRs for 2Z systematic puncturing bits. In this case, the input LLR sequence 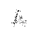 may be modified based on a code parameter (code dimension 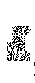 , code length *N*, code rate-matching size , code rate *K*/*E*, and various parameters and a parity check matrix size 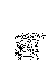 calculated based thereon), or decoding may be performed using only a part of 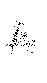 . Specifically, in a case where a puncture has occurred in a subcarrier when a transmission code rate is high, the receiver may reduce decoding complexity and processing time by not using a part of a parity check matrix corresponding to the punctured bits in decoding, according to a condition.

Decoding for the LDPC code is a process of performing belief-propagation (BP) based on an LLR for a codeword bit. In the BP decoding process, a message-passing operation for iteratively updating an a posteriori LLR (AP-LLR) for a codeword bit is performed, and the maximum number of iterations of the iterative decoding is determined based on requirements for decoding performance, time, etc. In general, a syndrome check is performed once or a specific number of times each time the iterative decoding process is performed. This is a process of identifying whether an estimated bit sequence x̂ obtained by a hard decision based on the updated AP-LLR is a null space for a parity check matrix, that is, whether it satisfies Hx̂^{T} =0 based on Equation 1, which is a condition of the LDPC code. It should be noted that only some of the estimated bit sequences x̂ may be considered in the syndrome check, and in this case, the syndrome check equation may also be modified. The validity of the decoded estimated bit sequence x̂ is identified through a syndrome check, and based on this, a decision is made as to whether to perform early termination of decoding.

As described above, when a bit of the mother code is punctured, the LDPC decoder may perform decoding by using a sub parity-check matrix (sub-PCM) ^{H'} composed of submatrices of the parity-check matrix H in order to reduce the decoding complexity and the processing time. In this case, the series of BP decoding processes may be modified to match the sub-parity check matrix H'. Decoding operations using the modified parity check matrix H' are not essential, but they may typically be used to reduce complexity.

The estimated bit sequence for the code block obtained after LDPC decoding may include shortened bits with no fixed amount of information due to the zero filling 530 performed by the transmission device. Therefore, zero removal 670 may be performed to exclude shortened bits from the estimated bit sequence as the reverse process of zero filling performed by the transmission device 500.

When the outer coding 520 has been performed for the code block, a bit sequence obtained as an LDPC decoding result may be decoded based on the outer encoding 680. In general, an error detection code such as a CRC code is often concatenated, and in this case, the validity of the bit sequence obtained by LDPC decoding is additionally checked.

If the transport block is composed of multiple code blocks, an inverse segmentation 690 may be performed to concatenate the results of the respective code blocks to derive a final result. This process may be understood as the inverse process of the segmentation 510 performed by the transmission device 400.

The components illustrated in FIG. 6 may be components that perform functions corresponding to the components illustrated in FIG. 6, and these are merely examples, and some may be omitted or changed depending on the case, and other components may be added.

Embodiments of the disclosure relate to the LDPC decoding operation 660 among a series of processes performed by the receiver. As described above, the LDPC decoding operation is performed based on a given LLR sequence 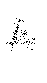 . The initial LLR sequence given to the decoding operation is also referred to as an intrinsic LLR. This is to distinguish from the a posteriori LLR (AP-LLR), which is updated through iterative belief-propagation during the decoding process.

LLR represents an estimate of the value of a corresponding codeword bit and the confidence or reliability of the estimation. Specifically, in an embodiment, the LLR 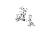 for a codeword bit 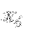 may be defined as shown in Equation 3 below based on the corresponding symbol *yᵢ* observed by the receiver.${λ}_{i} = log \frac{p \left({y}_{i}\left|{x}_{i}=0\right.\right)}{p \left({y}_{i}\left|{x}_{i}=1\right.\right)}$

According to the definition of Equation 3, the LLR is a value obtained by taking the log of the ratio of the probability, i.e., the likelihood, of an observed symbol *yᵢ* for the value of the code word bit 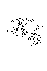 .

In Equation 3, if the likelihood for codeword bit 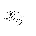 value 0 is greater than the likelihood for codeword bit 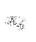 value 1, then LLR *yᵢ* has a positive value greater than 0. Conversely, in Equation 3, if the likelihood for codeword bit 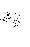 value 1 is greater than the likelihood for codeword bit 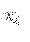 value 0, then LLR 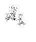 has a negative value less than 0. Therefore, the sign of LLR indicates the more likely value among the possible values that the corresponding codeword bit may take.

As an embodiment, the LLR may be defined differently from the above. For example, the fractional value in which the numerator and the denominator are swapped may be in the log of Equation 3. Such an LL is defined so as to change only the sign of the LLR (i.e., to change + to - and - to +), as in Equation 3. In the disclosure, the operation of the disclosure is described by considering the LLR defined as in Equation 3, but even if the LLR is defined differently, the same operation may be applied without any difference when the sign is changed.

In Equation 3, if the difference between the likelihood for codeword bit 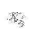 value 0 and the likelihood for codeword bit 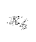 value 1 is large, the absolute value |*λᵢ*| of LLR 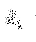 becomes very large. As an extreme example, if the likelihood for 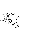 value 0 is 1 and the likelihood for codeword bit 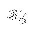 value 1 is 0, showing a large difference, 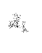 LLR 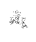 has a positive infinite value. As the opposite extreme example, if the likelihood for 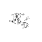 value 0 is 0 and the likelihood for codeword bit 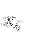 value 1 is 1, showing a large difference, LLR has a negative infinite value. However, if the likelihood for value 0 and the likelihood for codeword bit 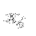 value 1 are identical at 0.5, meaning there is no difference, LLR 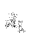 has a value of 0. Therefore, the absolute value of the LLR may be interpreted as indicating the confidence or reliability of the estimation on a value that the codeword bit may have.

The process of configuring a value of an LLR for a shortened codeword bit and a punctured codeword bit in the code rate-dematching unit 640 of the reception device is based on reliability expressed as an absolute value of the LLR. The reception device does not receive a shortened bit but may clearly know that its value is 0. Therefore, the LLR value for the shortened bit is configured to be a positive infinite value, which means that the bit value is 0 and the confidence or reliability regarding the value is high. In a real implementation, the LLR value may be configured as an arbitrary positive number that may be expressed by a used data type. Conversely, the reception device cannot know any information regarding the punctured bit, and thus the LLR value for the shortened bit is determined as 0, which means that the probabilities of the two values that the codeword bit may have are identical at 0.5.

The absolute value of each element of the intrinsic LLR sequence may be interpreted as a measure of the extent to which the observation result of the reception device for each codeword bit is corrupted by noise. For example, if the absolute value |*λᵢ*| of LLR 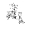 for a codeword bit 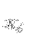 is large, it indicates that the corresponding codeword bit has not been corrupted during the series of end-to-end transmission processes (including all related series of processes at the transmission device and reception device). On the other hand, if the absolute value |*λᵢ*| of LLR 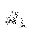 for a codeword bit 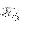 is small enough to be close to 0, it indicates that the corresponding codeword bit has been corrupted during the series of end-to-end transmission processes (including all related series of processes at the transmission device and reception device).

The decoding operation 660 of the LDPC code is performed through the iterative belief-propagation based on the intrinsic LLR sequence, as described above. An example of belief-propagation decoding of the following LDPC code is described below. The structure and architecture of the decoder, the used algorithm, and the like may be configured in various ways, and the following is a specific implementation method, and does not limit the scope of application of the embodiments of the disclosure. Embodiments of the disclosure may be applied to various decoding architectures and algorithms, and the application methods will be clearly understood by those skilled in the art.

The decoder receives the intrinsic LLR sequence 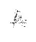 and updates the AP-LLR sequence Γ = (γ₀, γ₁, ..., *γ*_{*N-*1}) through the belief-propagation process, based on the intrinsic LLR sequence. It should be noted that, regardless of whether the intrinsic LLR sequence 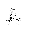 includes the LLR for 2Z systematically punctured bits, the AP-LLR sequence Γ = (γ₀, γ₁, ..., *γ*_{*N-*1}) includes the LLR for 2Z systematically punctured bits. During decoding, the initial AP-LLR sequence 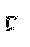 is configured as an intrinsic LLR sequence 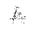 . In an embodiment, if the intrinsic LLR sequence 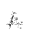 does not include an LLR for a systematically punctured bit (i.e., Λ = (*λ*₀, *λ*₁, ..., *λ*_{*N*_{cb}-1}) ), the initial AP-LLR Γ = (*γ*₀, *γ*₁, *..., γ*_{*N-*1}) may be configured as in Equation 4 below.${γ}_{i} ← \left\{\begin{matrix}0 , & if i < 2 Z \\ {λ}_{i - 2 Z} , & if i \geq 2 Z\end{matrix}\right. for i = 0 , 1 , … , N - 1$

In an embodiment, if the intrinsic LLR sequence 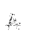 includes an LLR for a systematic punctured bit (i.e., Λ = (*λ*₀, *λ*₁, ..., *λ*_{*N*-1}) ), the initial AP-LLR Γ *=* (*γ*₀, γ₁*, ...,γ*_{*N-*1}*)* may be configured as in Equation 5 below.${γ}_{i} ← {λ}_{i} for i = 0 , 1 , … , N - 1$

As described above, when an LDPC decoder uses a sub parity-check matrix (sub-PCM) H' by considering punctured bits, it should be noted that the actual code length considered in this case may be smaller than the code length *N* of the mother code. Since whether the sub parity check matrix is used is irrelevant to the detailed operations of the decoder, the following will describe the decoding operations by assuming that the parity check matrix 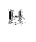 is used.

The AP-LLR sequence configured as above is updated every time by the iterative belief-propagation operation of the LDPC decoding. This process may be understood as a message-passing operation between a variable node (hereinafter VN) and a check node (hereinafter CN) on a bipartite graph corresponding to a parity check matrix (or a sub parity check matrix).

First, a message to be transferred from a VN to a CN is determined, based on an intrinsic LLR sequence or an AP-LLR sequence determined based thereon. The variable-to-check message (hereinafter V2C message) that VN 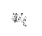 transmits to neighbor *cⱼ* is denoted as α_{i→j} . At the beginning of a decoding operation, the V2C message is determined as in Equation 6 below.${α}_{i \to j} ← {γ}_{i} , ∀ j ∈ \left〈{C}_{i}\right〉$

In Equation 6, 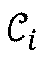 is the set of all neighboring CNs of VN 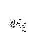 , and 〈 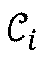 〉 is the index set of the CNs in 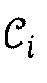 .

Each CN calculates a message to be transmitted to a neighboring VN, based on the V2C message received from a neighboring VN. A message (check-to-variable message, hereinafter a C2V message) transmitted from the CN *cⱼ* to a neighboring VN 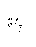 is denoted as *β*_{*j*→*i*}. The C2V message may be calculated as in Equation 7 below.${β}_{j \to i} ← 2 {tanh}^{- 1} \left({\prod }_{k ∈ \left〈{V}_{j}\right〉 \ \left\{i\right\}} tanh \left(\frac{{α}_{k \to j}}{2}\right)\right)$

In Equation 7, 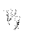 is the set of all neighboring VNs of CN *cⱼ*, and 〈*Vⱼ*〉 represents the set of indices of VNs belonging to 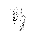 . As in Equation 7, the C2V message *β_{j→i}* transmitted from the CN *cⱼ* to the neighboring VN 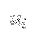 is calculated based on the V2C messages received from all the other neighboring VNs except for the VN 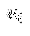 .

The C2V message calculation by Equation 7 may be approximated and calculated in various ways. In an embodiment, the C2V message calculation, such as in Equation 7, may be calculated as in Equation 8 below, by using so-called a min-sum approximation method.${β}_{j \to i} ← A \times \left({\prod }_{k ∈ \left〈{V}_{j}\right〉 \ \left\{i\right\}} sgn \left({α}_{k \to j}\right)\right) \times max \left({min}_{k ∈ \left〈{V}_{j}\right〉 \ \left\{i\right\}}\left|{α}_{k \to j}\right|-B,0\right)$

In Equation 8, sgn(·) is a function that outputs the sign ±1 of an input value. In Equation 8, 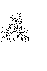 is a normalization value greater than 0, and 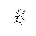 is an offset value equal to or greater than 0. The C2V message calculation by Equation 8 is widely used because it is simpler and easier to implement than the C2V message calculation by Equation 7, and provides a good approximation of the result.

When the CNs calculate a C2V message for neighboring VNs, each VN updates an AP-LLR and a V2C message, based on an intrinsic LLR and the C2V message received from a neighboring CN. First, the AP-LLR 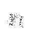 of VN 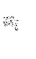 may be calculated as in Equation 9 below.${γ}_{i} ← {λ}_{i} + {\sum }_{j ∈ \left〈{C}_{i}\right〉} {β}_{j \to i}$

In addition, a V2C message, which VN 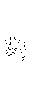 transmits to a neighboring CN *cⱼ* , may be calculated as in Equation 10 below.${α}_{i \to j} ← {λ}_{i} + {\sum }_{k ∈ \left〈{C}_{i}\right〉 \ \left\{j\right\}} {β}_{k \to i}$

The V2C message calculated as in Equation 10 may also be simply calculated by using the AP-LLR *γᵢ* calculated in Equation 9 as in Equation 11 below.${α}_{i \to j} ← {λ}_{i} - {β}_{j \to i}$

Estimation for each codeword bit may be performed based on the updated AP-LLR as in Equation 9 above. The estimate *x̂ᵢ* of a codeword bit 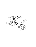 based on the updated AP-LLR *γᵢ* may be obtained by the following hard decision process of Equation 12.${\hat{x}}_{i} ← \left\{\begin{matrix}0 , & if {γ}_{i} > 0 \\ 1 , & if {γ}_{i} < 0\end{matrix}\right.$

The hard decision as in Equation 12 is based on the definition of LLR in Equation 3. If the definition of the LLR is different, the hard decision in Equation 12 may be modified accordingly. If an LDPC code decoder is implemented using a fixed-point representation method, AP-LLR 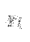 may be exactly 0. In this case, during the hard decision process of Equation 12, the estimate *x̂ᵢ* may be determined by a predetermined rule. In an embodiment, when the AP-LLR is 0, the estimate *x̂*ᵢ may be fixed and determined to one of 0 or 1. In an embodiment, when the AP-LLR is 0, the estimate *x̂ᵢ* may randomly select and determine one of the values of 0 or 1.

Ones the estimation of all codeword bits is obtained as described above, it is identified whether the estimated codeword vector x̂ = (*x̂*₀*, x̂*₁, *..., x̂*_{*N-*1}) is valid in terms of the given LDPC code, that is, whether it satisfies Hx̂*^{T}* = 0 . This process is referred to as a syndrome check. If the estimated codeword vector x̂ satisfies the syndrome check equation Hx̂*^{T}* = 0 , since the estimated codeword vector is valid in terms of the LDPC code being used, x̂ may be output as a result and the decoding may be terminated early, even if the maximum number of iterations of decoding has not been performed. If the estimated symbol vector x̂ does not satisfy the syndrome check equation Hx̂*^{T}* = 0 , the above series of processes of C2V message calculation, P-LLR update, V2C message calculation, and hard decision are iteratively repeated within a predetermined maximum number of decoding iterations. If the estimated codeword vector x̂ satisfying the syndrome check equation Hx̂*^{T}* = 0 is not found within the predetermined maximum number of decoding iterations, the decoding may be considered a failure, and the sequence of decoding operations may be terminated.

The syndrome check equation Hx̂*^{T}* = 0 performs a syndrome check for all elements of the estimated codeword vector. However, from the perspective of the reception device, only the information bits included in the estimated symbol vector are of interest, and therefore, the validity of the decoding result may be determined by using only some of the syndrome check equations, without using all the estimated symbol vectors.

The initially given intrinsic LLR value as in the above series of message-passing processes is exchanged with neighboring nodes by the structure of a bipartite graph and used to update the AP-LLR. If the absolute value of the intrinsic LLR is small, this value is not significantly affected by the belief-propagation decoding operation. In other words, a low reliability LLR value generated by an observation result that is interfered with or damaged by a channel does not affect decoding.

Based on such a belief-propagation process, an LDPC code decoder may improve performance by processing LLRs with low reliability (i.e., LLRs with small absolute values) in a specific manner. Specifically, the LDPC code decoder may try all guesses for bits determined to have low reliability, and select one of them. For example, the LDPC code decoder may identify the locations of the number of bits determined to have low reliability. The reliability of a bit may be determined or evaluated based on various criteria, and may be determined or evaluated based on an absolute value of an LLR generated by receiving a signal from a channel. In addition, the LDPC code decoder may generate all possible bit patterns of 2*^{p}* for the 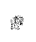 bits evaluated or identified as having low reliability, reflect the same in the LLR, decode each of the same, and then combine the results to identify a final result. For example, if *p* = 3 , all possible bit patterns are given as 2*^{p} =* 8, such as {000, 001, 010, 011, 100, 101, 110, 111} , one of which is for the exact bit transmitted by the transmitter. The method of reflecting each bit pattern in the LLR is to substitute the LLR of the maximum absolute value corresponding to the bit value in the location of each bit. The maximum absolute value of an LLR for bit 0 may be +∞ based on Equation 3, and may be an arbitrary positive number in actual implementation, in consideration of a representable LLR range and to avoid various numerical problems.

The maximum absolute value of an LLR for bit 1 may be -∞ based on Equation 3, and may be an arbitrary negative number in actual implementation, in consideration of a representable LLR range and to avoid various numerical problems. The 2*^{p}* = 8 modified candidate LLR sequences generated as above are each decoded. The decoding operation that performs iterative message passing, such as belief-propagation decoding, causes the LLR of each bit to affect the update of the AP-LLR of another bit. Therefore, among the 2*^{p}* modified candidate LLR sequences, the sequence including the exact bit transmitted by the transmitter has a positive impact on the improvement of other bits through iterative belief-propagation decoding, which increases the possibility of successful decoding. Whether decoding is successful may be identified by an LDPC code and a related function, and in an embodiment, this may be identified through a syndrome check performed by the LDPC code decoder and decoding of a CRC code outer concatenated therewith.

The above-described series of processes is a method that, after reflecting all possible guesses for a bit with low reliability in a decoder input, iteratively performs belief-propagation decoding, expecting that a successful decoding will occur for an input in which an exact guess is reflected. Such an opportunistic decoding operation is called by various names, including ensemble decoding, quasi maximum-likelihood (quasi-ML, QML) decoding, afterburner decoding, saturate decoding, etc. In the disclosure, such a technique is collectively referred to as ensemble decoding.

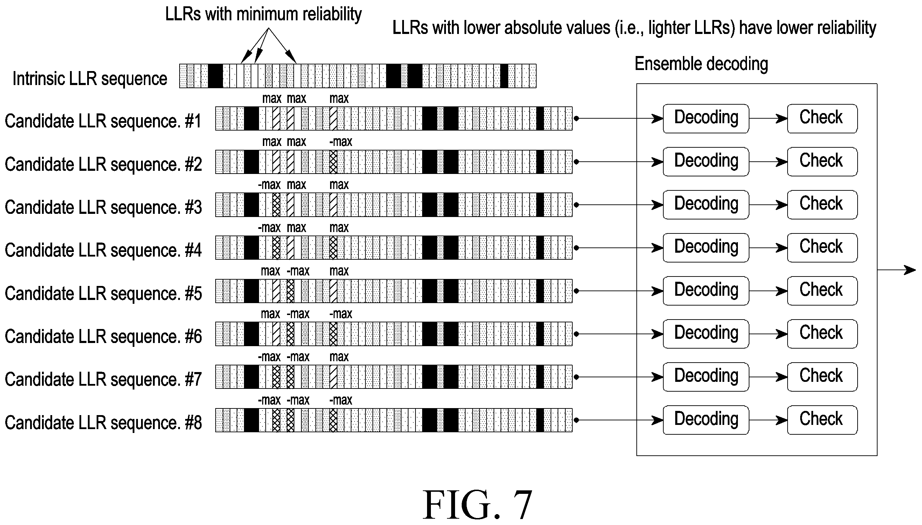

FIG. 7 illustrates a procedure of ensemble decoding in which a reception device selects a location of an LLR with low in an intrinsic log-likelihood ratio (LLR) sequence and performs decoding by generating a modified candidate LLR sequence based on the location.

FIG. 7 conceptually illustrates a process of an ensemble decoding technique that identifies the validity of a result by guessing a low-reliability LLR in all possible ways as in the above method and then belief-propagating the LLR.

The ensemble decoding operation begins with the process of finding 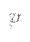 locations in all or part of a given intrinsic LLR sequence that have a low (or are judged to be low) absolute value. This process may involve a sorting process of the absolute value of the entire or a partial range of the given LLR sequence. For example, if *N* is the number of LLRs within the range to be changed (shortened to search range) in an intrinsic LLR sequence, finding 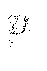 LLRs with lower absolute values within this search range involves Σ_{*k*=1,2,...,}*ₚ N' - k* comparison operations. In this way, when 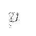 locations of LLR with low absolute values are found, 2*^{p}* modified candidate LLR sequences are generated by modifying the LLR values at those locations into pre-configured positive and negative numbers. The pre-configured positive and negative numbers may generally be determined as the maximum positive and minimum negative numbers used for LLR expression in a demodulator, but it is not necessarily the case, and may also be determined as an arbitrary positive number or negative number in the expression range. For example, as illustrated in FIG. 7, if 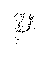 is 3, all possible combinations of 8 modified candidate LLR sequences may be generated.

As described above, the modified candidate LLR sequences may each be decoded independently. As described above, the decoding of the LDPC code is performed through a belief-propagation process based on an intrinsic LLR sequence. Since the modified candidate LLR sequences are generated from all possible combinations of the codeword bits, it is clear that one of them is the one corresponding to the exact codeword bits. Therefore, the modified candidate LLR sequence in which the absolute LLR value for the correct codeword bit is changed to a maximum or high value transmits the correct message to other codewords through an iterative message exchange decoding operation, and consequently, the probability of successful decoding increases. Therefore, if the decoding is successfully completed after performing decoding for each of the modified candidate LLR sequences for 2*^{p},* performing a syndrome check, and performing a check by the concatenated CRC code, an estimate obtained by the corresponding decoding may be regarded as the result of the successfully completed decoding. Accordingly, the ensemble decoding method and device increases the decoding success probability and improves the error-correction performance by performing multiple decoding operations based on a plurality of modified candidate LLR sequences and aggregating the results.

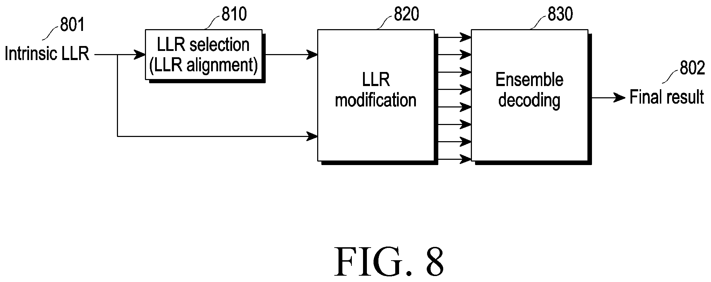

FIG. 8 illustrates an example of a block diagram illustrating the order of operations of ensemble decoding.

Referring to FIG. 8, an LLR selection process 810 for finding a location to change the value of an LLR is performed for a given intrinsic LLR sequence 801. In general, the LLR selection process 810 uses a process of sorting the absolute values of the LLR, and finding a predetermined number of locations with the low value. Once the location to change the value is found, an LLR modification process 820 for generating up to 2*^{p}* modified candidate LLR sequences for all combinations for this location is performed. The decoder decodes (830) each modified candidate LLR sequence, aggregates the results, and outputs the aggregated results as a final output 802.

If at least one of the decoding operations performed based on the up to 2*^{p}* modified candidate LLR sequences is successful, the result is output as the final result. Although the probability is low, if two or more decoding operations are successful, the final result is generated according to a predetermined rule. If neither of the decoding operations is successful, a decoding failure is declared.

Hereinafter, a method for improving an ensemble decoding method and device will be presented based on various embodiments. The ensemble decoding method sorts the elements of the intrinsic LLR sequence to determine the location of the LLR to be changed. In the disclosure, the following problems or parts to be improved are identified in the above ensemble decoding method.
- The ensemble decoding method and device identifies the location of an LLR to be changed, based on an intrinsic LLR sequence, but this may not guarantee the improvement of the final decoding result.
- The ensemble decoding method and device, in determining the location of an LLR to be changed, performs an operation of comparing the absolute values of all LLRs. Such an operation is an operation that has not been performed in general decoding, and causes additional complexity and delay.

Embodiments of the disclosure improve the problems of the ensemble decoding method and device, based on the structure and features of the LDPC code. Hereinafter, various embodiments of the disclosure will be introduced.

The ensemble decoding method and device according to an embodiment of the disclosure, in determining a location of an LLR to be changed based on a given intrinsic LLR sequence, are characterized in that a search range of an LLR to be changed is limited to information bits (or information bits and shortening bits), or to a partial area determined as being helpful for belief-propagation decoding.

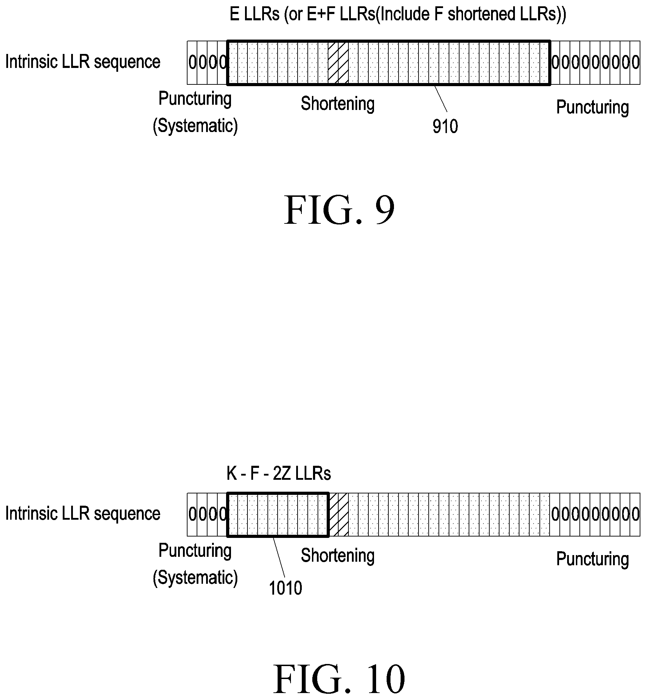

FIGS. 9 and 10 illustrate an example of a range of an LLR to be changed in value.

FIG. 9 illustrates that a search range for a reception device to find the location of an LLR to change a value in a given intrinsic LLR sequence is the entire range excluding the location of an unpunctured bit.

In the method illustrated in FIG. 9, the entire range 910 excluding the unpunctured bit locations from the given intrinsic LLR is considered as the search range. Therefore, the number of LLRs in the search range may be a minimum number *E*, which is the number of bits transmitted through the channel (i.e., the code rate-adjusted bit length). Because the LLR for the shortened bit is configured to a large value corresponding to bit 0, including the LLR for the shortened bit in the search range may not result in a difference in the final result. Therefore, for ease of implementation, a search range of *E*+*F* consecutive bits, including LLRs 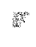 for shortened bits, may be considered to find the location with the LLR. If there is no punctured bit, the number of LLRs in the search range may be up to *N* - 2*Z*, excluding the systematic puncturing bit locations.

FIG. 10 illustrates that a search range for a reception device to find the location of an LLR to change a value in a given intrinsic LLR sequence.

FIG. 10 illustrates that the search range for an LLR to change its value may be partially limited by considering bit characteristics, code configuration, etc. As an embodiment, the remaining information bits, excluding systematic puncturing bits and shortened bits, may be considered as the search range of an LLR to change the value, and the predetermined 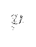 LLR locations may be selected in this range. In this case, the number of bits in the search range to find the LLR to change is *K - F* - 2*Z* , excluding 2*Z* systematic puncturing bits and 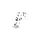 shortened bits from the 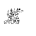 total systematic parts. According to this embodiment, the search range to find an LLR to change the value regardless of the code rate of the LDPC code used (i.e., regardless of the number of parity bits) is fixed to *K - F -* 2*Z* as illustrated in FIG. 10, and this value is smaller than *E* . The method according to the embodiment may be implemented and realized with lower complexity and delay because it finds the LLR to change the value in a smaller search range than the method illustrated in FIG. 9.

The reason why, as described above, in an embodiment of the disclosure, the information bit range excluding the punctured and shortened bits is determined as a search range of the LLR for changing the value is that a general LDPC code is designed to improve information bits in priority to parity bits. For example, a 3GPP NR LDPC code has been designed to target error correction and recovery for information bits, and accordingly, the VNs corresponding to the information bits have been designed to receive messages from a larger number of neighboring CNs. That is, the LDPC code is designed so that the VNs corresponding to the information bits have a high degree. If the absolute value of the information bit LLR corresponding to a VN with a high degree is large, it may have a greater positive effect on other bits in iterative message passing through the belief-propagation. The above-described embodiment of the disclosure determines a search range to change the LLR value of an information bit corresponding to a VN having a high degree, based on this basis.

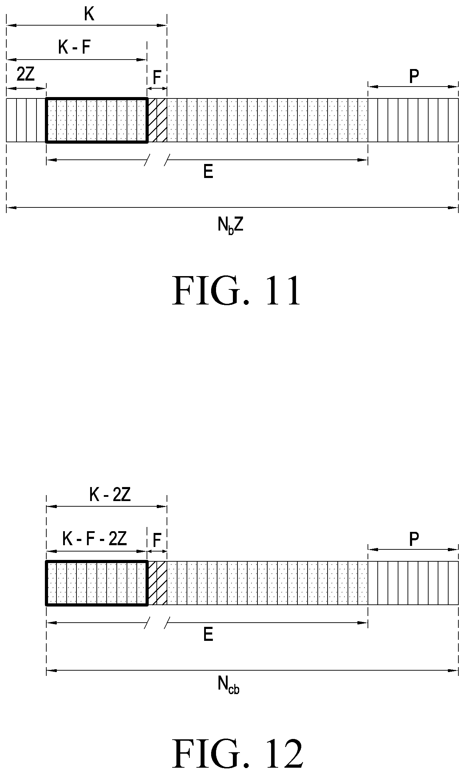

FIG. 11 illustrates an example of a search range for finding the location of an LLR to change a value in a given intrinsic LLR sequence including a systematic puncturing bit, according to an embodiment of the disclosure.

FIG. 11 specifically illustrates a search range of an LLR whose value may be changed by the above embodiment of the disclosure when an intrinsic LLR sequence includes an LLR for 2*Z* systematic puncturing bits. The index of the systematic puncturing bits is from 0 to 2*Z* - 1 , and in this case, the index of the search range determined by an embodiment of the disclosure may be [2*Z*, *K* - *F*) = [2*Z*, *K* - *F* - 1].

FIG. 12 illustrates an example of a search range for finding the location of an LLR to change a value in a given intrinsic LLR sequence not including a systematic puncturing bit, according to an embodiment of the disclosure.

FIG. 12 specifically illustrates a search range of an LLR whose value may be changed by the above embodiment of the disclosure when an intrinsic LLR sequence does not include an LLR for systematic puncturing bits. Since there is no systematic puncturing bit, in this case, the index of the search range determined according to an embodiment of the disclosure may be [0,*K* - *F* - 2*Z*) = [0,*K* - F - 2*Z* - 1]. For the sake of implementation convenience, the search range may be determined to include 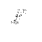 shortened bits and, in this case, the index of the search range determined by the embodiment of the disclosure may be [0,*K*- 2*Z*) = [0,*K* - 2*Z* -1].

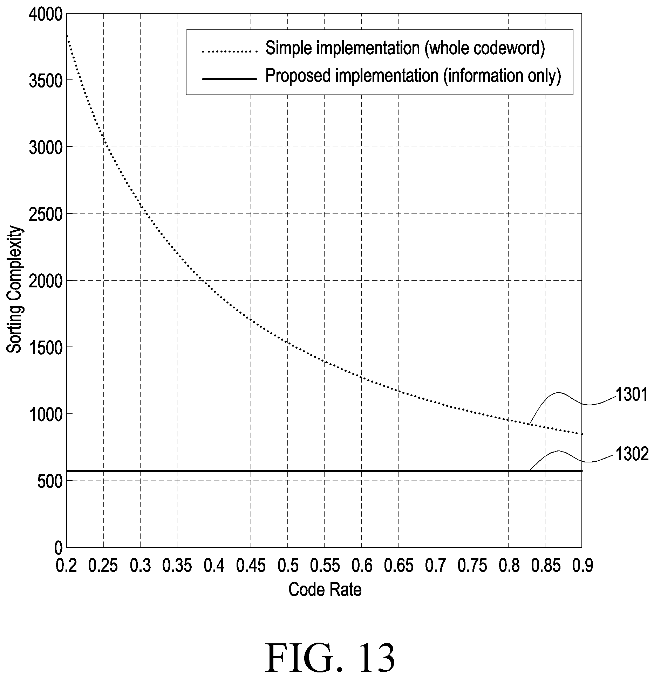

FIG. 13 is a diagram illustrating an effect of achieving low complexity when a search range is determined in a 5G new radio (NR) LDPC code system according to an embodiment of the disclosure.

FIG. 13 illustrates the computational complexity of the method (Method 1) for determining the entire LLR search range illustrated in FIG. 9 and the method (Method 2) of the above embodiment of the disclosure illustrated in FIG. 10 to find an LLR to change *p*=3 values when the code dimension 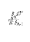 is 256 in a 5G NR LDPC code system. Here, both Method 1 and Method 2 identify the locations of *p*=3 LLRs in ascending order of absolute value within the determined search range. For example, if the size of the search range is 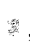 , *S -* 1 comparison operations may be required to find the LLR with the smallest absolute value. To find the LLR with the next smallest absolute value, *S*-2 comparison operations may be required for the remaining elements, excluding the previously found LLR with the smallest absolute value. In summary, when using the above method, the total number of comparison operations performed to find the 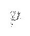 locations of LLRs with the smallest absolute values within a search range of size 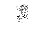 may be Σ_{*k*=1,...,*p*}(*S* - *k*).

The X-axis in FIG. 13 indicates a code rate. If the code rate is low, more parity bits are generated, increasing the code rate-matching length *E*, and if the code rate is high, fewer parity bits are generated, decreasing the code rate-matching length *E.* The Y-axis in FIG. 13 illustrates the total number of comparison operations performed to find *p*=3 locations of LLRs with the smallest absolute value within the search range of each method as described above.

In FIG. 13, a first curve 1301 is the total number of comparison operations performed by the method 1, and a curve 1302 is the total number of comparison operations performed by the method 2. As identified by comparing the curves 1301 and 1302, a method of partially limiting the search range for finding the smallest absolute value of the LLR in the LLR sequence illustrated in FIG. 10 (corresponding to method 2) performs a smaller number of comparison operations than method 1, thereby reducing complexity. In addition, method 2 always performs the same number of comparison operations regardless of the code rate.

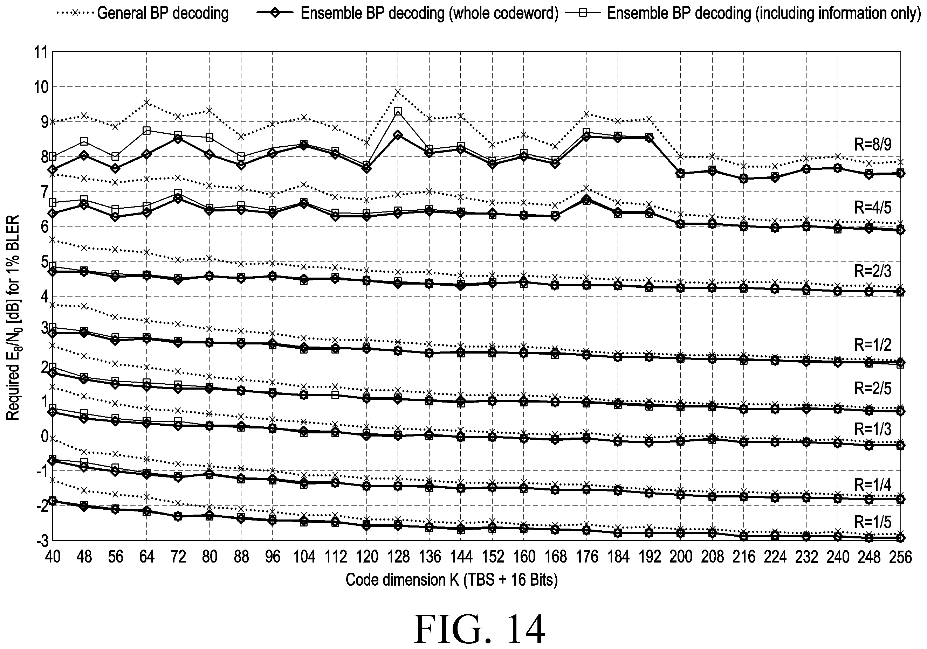

FIG. 14 is a diagram illustrating an effect of achieving error-correction performance when a search range is determined in a 5G NR LDPC code system according to an embodiment of the disclosure.

FIG. 14 illustrates results of evaluating the error-correction performance of a method 1 (method of determining a search range for the overall LLR illustrated in FIG. 9) and a method 2 (the method of the embodiment of the disclosure illustrated in FIG. 10) in a 5G NR LDPC code system, according to a code dimension and a code rate.

In FIG. 14, the X-axis represents the code dimension 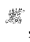 , and the Y-axis represents the *Eₛ*/*N*₀ (dB) value, which is the signal-to-noise ratio (SNR) at the point where BLER 1% is achieved through block error rate (BLER) evaluation experiments for each code parameter.

All individual points in FIG. 14 are identified through an experiment to obtain the BLER curve. Since a smaller *Eₛ*/*N*₀ value on the Y-axis, which represents the value for achieving 1% BLER, implies that the same BLER may be achieved with less energy, a smaller value indicates superior error-correction performance.

As illustrated in FIG. 14, the graph used to evaluate error-correction performance is useful in effectively showing the results of experiments with various code parameters (code dimension, code rate), and the same graph is used in the following descriptions to explain the effects of other embodiments.

FIG. 14 includes experimental results for various code rates, and each curve represents an experiment for a code parameter having the same code rate. The ensemble decoding method by the method (Method 1) of determining a search range illustrated in FIG. 9 and the method (Method 2) of the above-described embodiment of the disclosure illustrated in FIG. 10 searches for the *p* = 3 LLR locations with lower absolute values in the intrinsic LLR sequence and attempts decoding by generating 2*^{p}* =8 modified candidate LLR sequences in which the values of the LLR at the corresponding locations are changed to all possible patterns. The difference between Method 1 and Method 2 is that they configure different search ranges to find the LLR location to change the value. For reference, the result of a normal decoding (normal BP) without applying ensemble decoding is also shown.

As illustrated in FIG. 14, the method of considering the search range limited by the above-described embodiment of the disclosure may achieve almost the same error-correction performance as a method of considering the entire LLR sequence as a search range. As identified through FIGS. 13 and 14, the method of considering the limited search range according to the embodiment of the disclosure may achieve the same error-correction performance as the method of considering the entire LLR sequence as the search range with a smaller number of operations.

Hereinafter, a method of determining a location of an LLR to change the value, based on an AP-LLR obtained after one decoding based on an intrinsic LLR sequence will be described.

The ensemble decoding method and device according to an embodiment of the disclosure, after attempting decoding based on a given intrinsic LLR sequence, determines a location of an LLR to change the value, based on an AP-LLR sequence finally obtained when the decoding has failed. This operation may identify which location of the LLR ultimately failed to converge and caused the decoding to fail when performing decoding based on the intrinsic LLR sequence, and then perform pre-compensation therefor. According to the above-described embodiment, the decoding performance may be improved by changing the LLR that finally and critically contributes to the decoding failure.

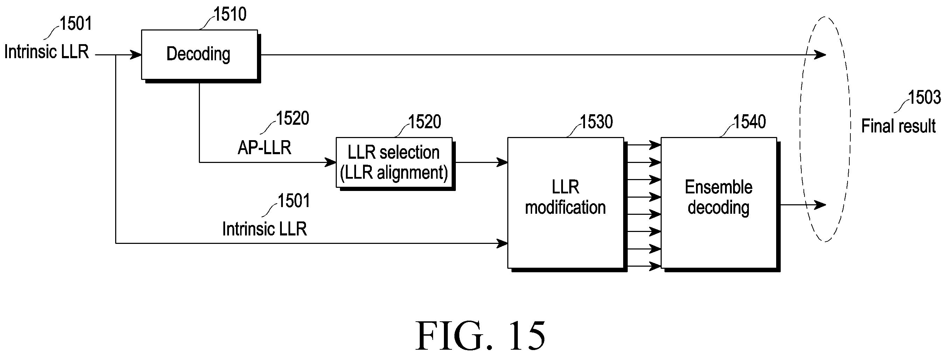

FIG. 15 illustrates a procedure for determining a location of an LLR to change the value based on an AP-LLR sequence obtained by decoding an intrinsic LLR sequence as an input, and changing a value of the intrinsic LLR sequence based on the locations, and performing ensemble decoding based thereon, according to an embodiment of the disclosure.

FIG. 15 illustrates the process of the above embodiment as a block diagram. First, the reception device may perform general decoding 1510 for a given intrinsic LLR sequence 1501. If the decoding is successful, the reception device may calculate an estimate obtained from the decoder as a final result 1503. If the decoding fails, the reception device may perform an LLR selection process 1520 for determining the LLR location to change the value based on the AP-LLR 1502 updated by the iterative belief-propagation decoding. The method for determining an LLR location to change the value based on the AP-LLR may be implemented through various specific operations, and the disclosure is not limited to any specific method. As an embodiment, the locations of 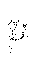 predetermined LLRs to change the value may be determined based on an absolute value of each element of the AP-LLR sequence, and for example, 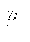 locations with the smallest absolute values may be determined. When the receiving device determines the location of the LLR to change the value, the decoder may change the value at the corresponding location of the given intrinsic LLR sequence to generate up to 2*^{p}* modified candidate LLR sequences (930).

According to the embodiment illustrated in FIG. 15, after performing iterative belief-propagation for a preconfigured maximum number of iterative decoding operations, the location of the LLR to change the value may be selected based on the updated AP-LLR sequence. In addition, according to an embodiment of the disclosure, the location of the LLR to change the value is determined based on the AP-LLR sequence, but the modified candidate LLR sequence is generated by changing the corresponding location element of the intrinsic LLR sequence.

In the process of determining the location of an LLR to change its value based on the AP-LLR sequence, the search range of the AP-LLR sequence may not be included in the search range because the intrinsic LLR sequence used as the search target includes an LLR (value 0) for a punctured bit, and this does not need to be considered as the location of an LLR to change its value. According to an embodiment of the disclosure, the operation of selecting an LLR location to change the value is based on an AP-LLR sequence obtained after decoding, and the AP-LLR for the punctured bit may be updated by an iterative belief-propagation operation. Therefore, unlike the LLR location selection method based on the intrinsic LLR sequence, in the method according to an embodiment of the disclosure, a punctured bit may also be considered as a location where the value of an LLR may be changed. In the above-described embodiment of the disclosure, the punctured bits considered as locations where a value may be changed may include a systematic puncturing bit (information bit) and a general puncturing bit (parity bit).

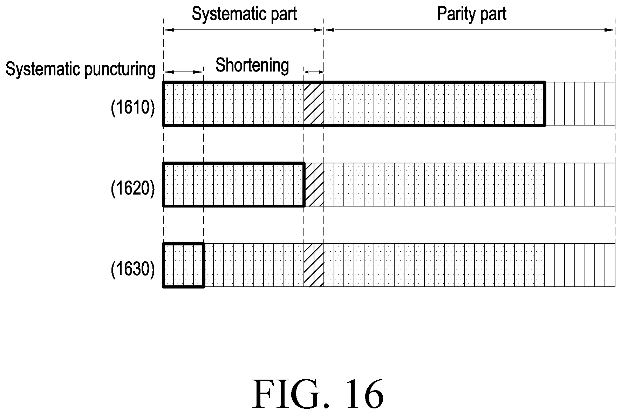

FIG. 16 illustrates an example of a search range for determining a location of an LLR to change a value, based on an AP-LLR sequence according to an embodiment of the disclosure.

The AP-LLR sequence may be mainly divided into a systematic part (a part for information bit) and a parity part. The systematic part may be further divided into a systematic puncturing part, a shortening part, and the remaining part. The parity part may be divided into a part where the LLR is updated by iterative decoding and a part where the LLR is not updated.

As described above, the LLR for some or all of the punctured bits may be updated by the iterative belief-propagation decoding operation. In particular, the systematic puncturing part is for information bits, so the restoration of this part must be necessarily performed, and therefore, the AP-LLR of the corresponding part is necessarily updated.

According to an embodiment of the disclosure, the location of an LLR to change the value may be determined by taking all ranges of LLRs, in which the AP-LLR is updated, as a search range, as shown in 1610 of FIG. 16. This search range may include systematic puncturing bits, remaining systematic bits, parity bits with updated AP-LLRs, and shortening bits. In this case, the AP-LLR for the shortened bit generally does not affect the determination of the LLR location to be changed. Therefore, in an embodiment of the disclosure, in a process of finding the location of an LLR to change the value from an AP-LLR sequence, all ranges in which the LLR is updated are considered as a search range, and a shortened bit may or may not be included in this search range.

According to an embodiment of the disclosure, as shown in 1620 of FIG. 16, the location of an LLR to change the value may be determined by using an LLR in a systematic range in which an AP-LLR is updated as a search range. This search range may include systematic puncturing bits, remaining systematic bits, and shortened bits. In this case, the AP-LLR for the shortened bit does not generally affect the determination of the LLR location to be changed. Therefore, as shown in 1620, in the process of finding the location of an LLR to change the value from the AP-LLR sequence, the systematic range in which the LLR is updated is considered as a search range, and a shortened bit may or may not be included in this search range.

According to an embodiment of the disclosure, as shown in 1630 of FIG. 16, the location of an LLR to change the value may be determined by using an LLR in a systematic puncturing bit in which an AP-LLR is updated as a search range. This search range may include all or some of the systematic puncturing bits. For example, a 3GPP NR LDPC code has been designed to effectively restore systematic puncturing bits, and accordingly, the VNs corresponding to the systematic puncturing bits have been designed to receive messages from a larger number of neighboring CNs. That is, the LDPC code is designed so that the VNs corresponding to the systematic puncturing bits have a high degree. If the absolute value of the information bit LLR corresponding to a VN with a high degree is large, it may have a greater positive effect on other bits in iterative message passing through the belief-propagation. Based on this basis, the search range is determined to change the LLR value of an information bit corresponding to a VN of a high degree, as in 1630 of FIG. 16.

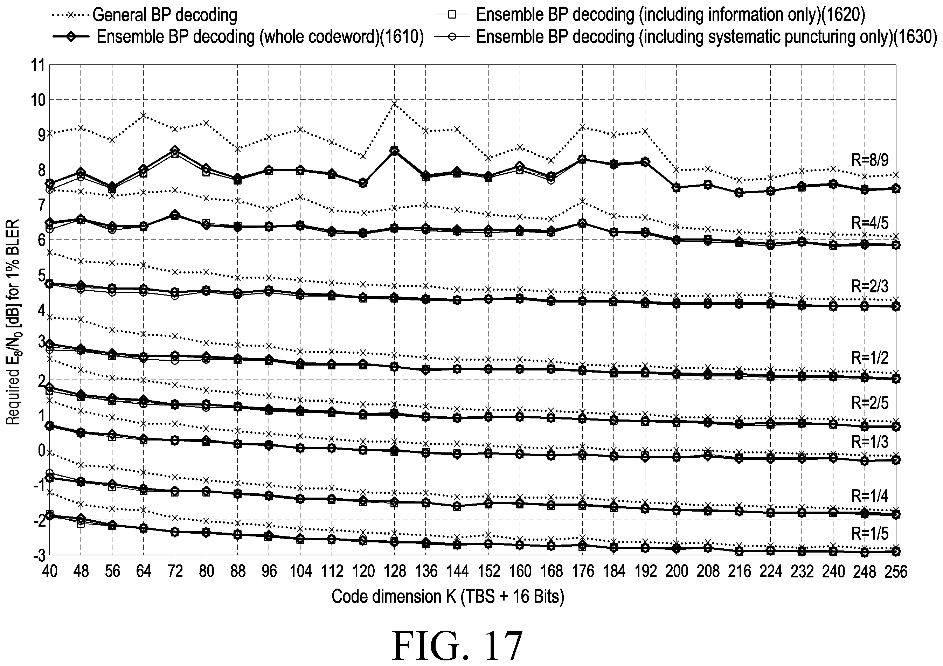

FIG. 17 is a diagram identifying and comparing the error-correction performance when determining the location of an LLR to change a value based on an AP-LLR with a different search range in a 5G NR LDPC code system according to an embodiment of the disclosure.

The experimental environment in FIG. 17, as well as the contents of the X-axis and the Y-axis, are the same as those in FIG. 14. The ensemble decoding method by the embodiments of the disclosure searches for the *p* = 3 LLR locations with lower absolute values in each search range of the AP-LLR sequence and attempts decoding by generating 2*^{p}* =8 modified candidate LLR sequences in which the values of the LLR at the corresponding locations are changed to all possible patterns. For reference, the result of a normal decoding (normal BP) without applying ensemble decoding is also shown.

As illustrated in FIG. 17, the embodiments of the disclosure achieve almost similar error-correction performance for various code dimensions and code rates even when different search ranges are configured, such as 1610, 1620, and 1630 in FIG. 16. Therefore, an embodiment with low complexity, in which a smaller search range is used as in 1630 of FIG. 16, may be the most preferred method in implementing and realizing the disclosure.

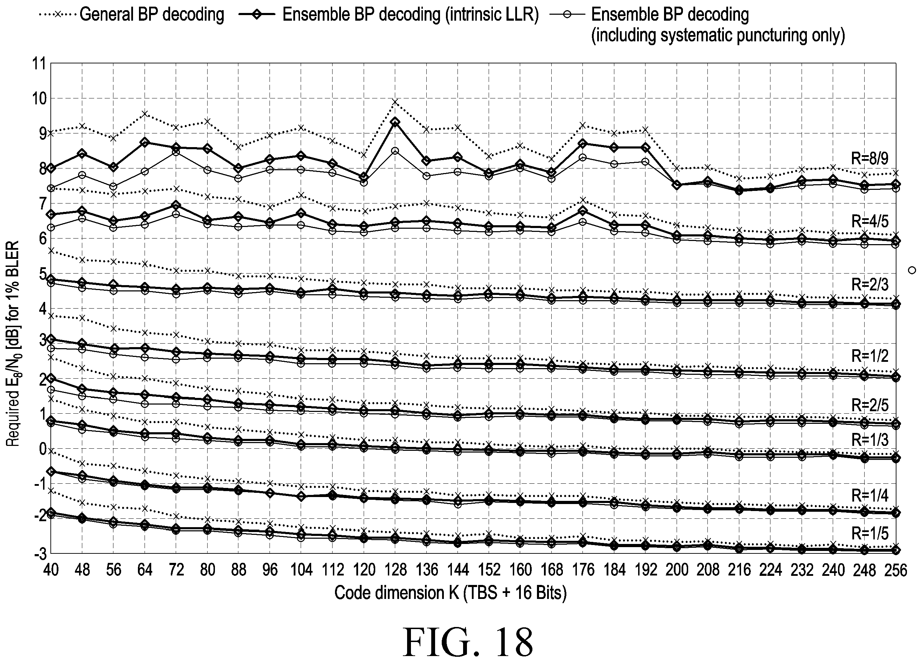

FIG. 18 is a diagram identifying and comparing the error-correction performance when determining the location of an LLR to change a value based on an intrinsic LLR sequence and an AP-LLR sequence in a 5G NR LDPC code system according to an embodiment of the disclosure.

FIG. 18 illustrates the error-correction performances of two embodiments of the disclosure for determining the location of an LLR to change the value, based on an intrinsic LLR and an AP-LLR in a 5G NR LDPC code system.

The experimental environment in FIG. 18, as well as the contents of the X-axis and the Y-axis, are the same as those in FIG. 14. The ensemble decoding method by the embodiments of the disclosure searches for the *p* = 3 LLR locations with lower absolute values in each of the intrinsic LLR sequence and the AP-LLR sequence and attempts decoding by generating 2*^{p}* =8 modified candidate LLR sequences in which the values of the LLR at the corresponding locations are changed to all possible patterns.

In an embodiment based on the intrinsic LLR sequence, unpunctured systematic bits are used as a search space. In an embodiment based on the AP-LLR sequence, the systematic puncturing bits are used as a search space. Both of the above methods change the values of the LLRs in the intrinsic LLR sequence, as described above. For reference, the result of a normal decoding (normal BP) without applying ensemble decoding is also shown.

As illustrated in FIG. 18, a method of determining a location of an LLR to change the value based on the AP-LLR achieves better performance (i.e., a lower curve in FIG. 18) than a method based on the intrinsic LLR. However, the method of determining the location of an LLR to change the value based on the AP-LLR may have high complexity and delay because it performs decoding once based on the intrinsic LLR. Therefore, one of the two methods may be effectively selected according to the conditions, environment, and requirements of the LDPC code system.

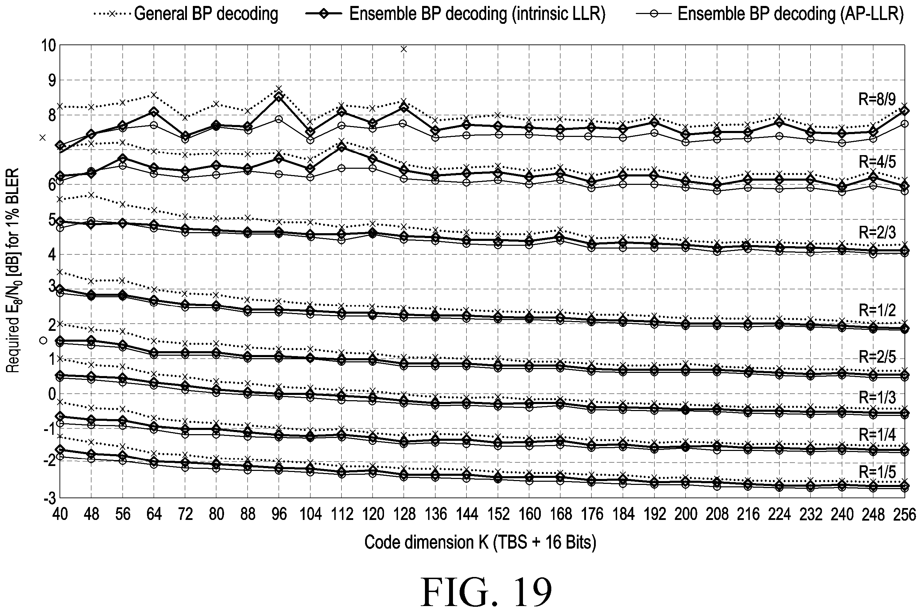

FIG. 19 is a diagram identifying and comparing the error-correction performance when determining the location of an LLR to change a value based on an intrinsic LLR sequence and an AP-LLR sequence in a 4G LTE turbo code system according to an embodiment of the disclosure.

The experimental environment in FIG. 19, as well as the contents of the X-axis and the Y-axis, are the same as those in FIG. 14. The ensemble decoding method by the above two embodiments of the disclosure searches for the *p* = 3 LLR locations with lower absolute values in each of the intrinsic LLR sequence and the AP-LLR sequence and attempts decoding by generating 2*^{p}* =8 modified candidate LLR sequences in which the values of the LLR at the corresponding locations are changed to all possible patterns.

In an embodiment based on the intrinsic LLR sequence, unpunctured systematic bits are used as a search space. In an embodiment based on the AP-LLR sequence, all the systematic puncturing bits are used as a search space. Both of the above methods change the values of the LLRs in the intrinsic LLR sequence, as described above. For reference, the result of a normal decoding (normal BP) without applying ensemble decoding is also shown.

As illustrated in FIG. 19, a method of determining a location of an LLR to change the value based on the AP-LLR according to the above-described embodiment of the disclosure achieves better performance (i.e., a lower curve in FIG. 18) than a method based on the intrinsic LLR. However, the method of determining the location of an LLR to change the value based on the AP-LLR may have high complexity and delay because it performs decoding once based on the intrinsic LLR. Therefore, one of the two methods may be effectively selected according to the conditions, environment, and requirements of the turbo code system.

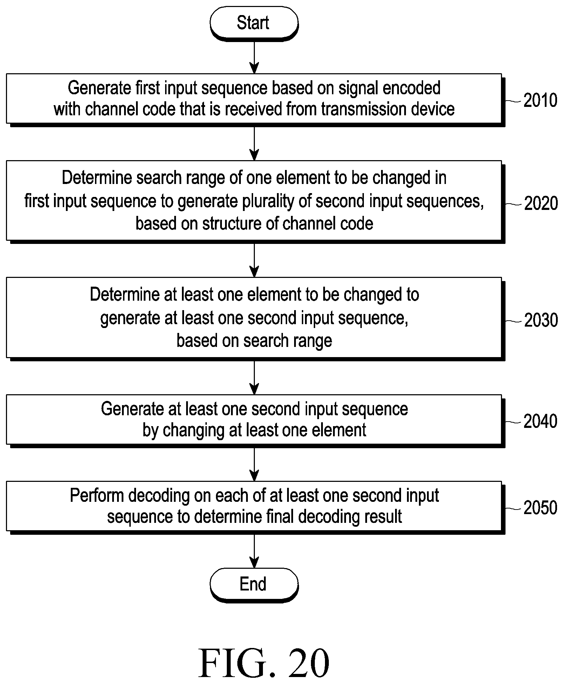

FIG. 20 is a flowchart illustrating an ensemble decoding operation of a channel code performed by a reception device according to an embodiment of the disclosure.

In operation 2010, the reception device may generate a first input sequence, based on a signal (or bit) encoded with a channel code that is received from the transmission device. In operation 2020, the reception device may determine a search range of one element to be changed in the first input sequence to generate a plurality of second input sequences, based on the structure of the channel code. As an embodiment, the reception device may determine, based on the structure of the channel code, a search range for at least one element to be changed to generate the plurality of second input sequences from the first input sequence. As an embodiment, the length of the search range may be shorter than the length E of the bits encoded and transmitted. As an embodiment, the length of the search range may be shorter than the smaller of the length E of the bit encoded and transmitted above and the length (N = NbZ) of the mother symbol.

As an embodiment, determining the search range of the at least one element by the reception device may include decoding for the first input sequence, identifying a first output sequence generated or updated based on the decoding, and determining the search range of the at least one element based on the first output sequence. As an embodiment, in determining the search range of the at least one element based on the first output sequence, when the first output sequence is updated, the reception device may determine the search range of the at least one element, based on one of a location of the updated elements in the first output sequence, a location of an updated information bit in the first output sequence, and a location of an updated systematic puncturing bit in the first output sequence. As an embodiment, the search range of the at least one element may be predetermined.

As an embodiment, the search range may be determined based on an information bit, a punctured bit within the information bit, and a shortened bit within the information bit. As an embodiment, the length of the search range may be a value K-2Z-F obtained by subtracting the length 2Z of the punctured bits in the information bits and the length F of the shortened bits in the information bits from the length K of the systematic part.

In operation 2030, the reception device may determine at least one element to be changed to generate the at least one second input sequence, based on the search range. As an embodiment, the reception device may determine at least one element to be changed to generate the at least one second input sequence based on the search range. As an embodiment, when the first input sequence is an LLR sequence, determining at least one element used by the reception device to generate the at least one second input sequence may include determining at least one element of n predetermined elements having low reliability values.

In operation 2040, the reception device may generate the at least one second input sequence by changing the at least one element. As an embodiment, generating the at least one second input sequence by the reception device may include generating 2n of the multiple second input sequences by changing at least one element of the n determined elements from the first input sequence.

In operation 2050, the reception device may perform decoding on each of the at least one second input sequence to determine a final decoding result.

As an embodiment, the reception device may receive, from the transmission device, information necessary for the decoding, and the first input sequence may be decoded based on the information necessary for the decoding. As an embodiment, when the reception device is a UE and the transmission device is a base station, the information necessary for the decoding may be transmitted through a higher layer message.

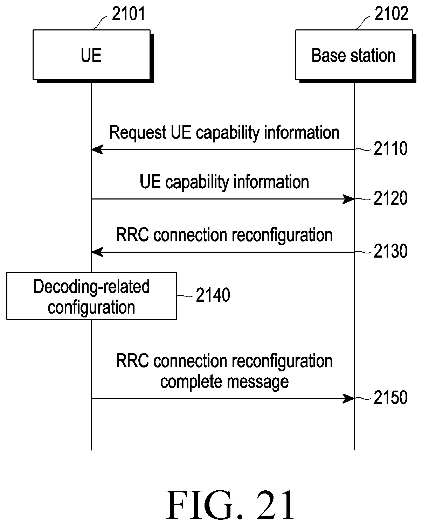

FIG. 21 is a flowchart illustrating an operation of decoding-related configuration based on a UE's capability information, in the case that a transmission device is a base station and a reception device is a UE, according to an embodiment of the disclosure.

FIG. 21 illustrates a case where the transmission device 200 illustrated in FIG. 2 is a base station 2102 and the reception device 240 is a UE 2101.

In operation 2110, the base station 2102 may request UE capability information from the UE 2101.

In operation 2120, the UE 2101 may transmit UE capability information to the base station 2102.

In operation 2130, the base station 2102 may transmit an RRC connection reconfiguration message to the UE 2101, including decoding-related configuration information considering the UE capability information or predetermined decoding-related configuration information. However, the RRC connection reconfiguration message is an example for transmitting the decoding-related configuration information, and a message (e.g., a message transferred from a higher layer) transmitted from the base station to the UE may correspond thereto, and is not limited to the RRC connection reconfiguration message.

As an embodiment, the decoding-related configuration information may include a code parameter used in encoding. The code parameter may include a parity check matrix of an LDPC code to be used and information on the same, information for segmentation, information for code rate matching (shortening, puncturing, iteration, etc.), information for bit interleaving, information for modulation, and the like. As an embodiment, the decoding-related configuration information may include scheduling information. As an embodiment, the decoding-related configuration information may include an LLR or a value corresponding thereto.

In operation 2140, the UE 2101 may perform a decoding-related configuration based on information included in the RRC connection reconfiguration message.

In operation 2150, the UE 2101 may transmit an RRC connection reconfiguration complete message to the base station 2102.

After completing the decoding-related configuration as described above, the UE 2101 may then receive an encoded signal from the base station 2102 and perform decoding based on the decoding-related configuration.

An embodiment of a channel code decoding method performed by a receiver in a communication and broadcasting system for solving the above problems includes:
Receiving a signal that has been encoded with a channel code and transmitted;
Generating an original decoder input sequence (or a vector, an array, etc.) such as a log-likelihood ratio (LLR) sequence from the signal;
Generating at least one modified decoder input sequence by changing at least one element in the original decoder input sequence;
Performing decoding based on each of the at least one modified decoder input sequence; and
Determining a final decoding result, based on results obtained from the decoding performed for each of the at least one modified decoder input sequence;
At least one element to be changed in the original decoder input sequence is determined within a limited range based on the structure and characteristics of a used channel code.

An embodiment of a method for decoding a channel code performed by a reception device in a communication and broadcasting system according to the invention for solving the above-described problems includes:
Receiving a signal that has been encoded with a channel code and transmitted;
Generating an original decoder input sequence (or a vector, an array, etc.) such as a log-likelihood ratio (LLR) sequence from the signal;
Performing decoding based on the original decoder input sequence;
Obtaining a decoder output sequence generated by a decoder when the decoding based on the original decoder input sequence has failed;
Determining a location for changing the value of at least one element based on the decoder output sequence;
Generating at least one modified decoder input sequence by changing at least one element of the original decoder input sequence, based on the location of the element to change the value;
Performing decoding based on each of the at least one modified decoder input sequence; and
Determining a final decoding result, based on results obtained from the decoding performed for each of the at least one modified decoder input sequence.

The disclosure may be applied to intelligent services (e.g., smart homes, smart buildings, smart cities, smart cars or connected cars, healthcare, digital education, retail business, security and safety-related services, etc.) on the basis of 5G communication technology and IoT-related technology. The disclosure provides an apparatus and a method for efficiently decoding a bit, symbol, and signal, which is encoded with a channel code such as a low-density parity-check (LDPC) code or a turbo code and transmitted via a channel, in a communication or broadcast system. Also, the disclosure provides an apparatus and a method for efficiently realizing and implementing ensemble decoding in which the final result is determined by decoding two or more modified log-likelihood ratio (LLR) sequences generated by changing the value of at least one element in an LLR sequence input to a decoder. Specifically, the ensemble decoding method and apparatus according to embodiments of the disclosure are characterized by determining at least one element, the value of which is to be changed, based on a limited range considering the structure and characteristics of a code used therefor. In addition, to be specific, the ensemble decoding method and apparatus according to embodiments of the disclosure are characterized by attempting decoding based on a decoder input LLR sequence and determining at least one element, the value of which is to be changed, based on a decoder output LLR sequence obtained therefrom.

Methods set forth in the claims or methods according to the embodiments described in the specification of the disclosure may be implemented by hardware, software, or a combination of hardware and software. When implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in non-volatile memory including random access memory and flash memory, a read only memory (ROM), electrically erasable programmable read only memory (EEPROM), a magnetic disc storage device, a compact disc-ROM (CD-ROM), digital versatile discs (DVDs), or other type optical storage devices, or a magnetic cassette. Alternatively, the program may be stored in a memory configured as a combination of some or all of them. In addition, a plurality of such memories may be included.

In addition, the programs may be stored in an attachable storage device which is accessible to the electronic device through communication networks such as the Internet, Intranet, local area network (LAN), wide LAN (WLAN), and storage area network (SAN) or a combination thereof. Such a storage device may access the electronic device via an external port. Also, a separate storage device on the communication network may access a device for performing embodiments of the disclosure.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural, and therefore, either an element expressed in the plural may also include a single element or an element expressed in the singular may also include multiple elements

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

## Claims

1. A method for decoding a channel code by a reception device in a wireless communication system, the method comprising:
generating a first input sequence, based on a bit that is received from a transmission device and encoded with a channel code;
in the first input sequence, determining, based on a structure of the channel code, a search range of at least one element to be changed in order to generate a plurality of second input sequences;
determining, based on the search range, the at least one element to be changed in order to generate the plurality of second input sequences;
generating the plurality of second input sequences by changing the at least one element; and
determining a final decoding result by performing decoding of each of the plurality of second input sequences.

2. The method of claim 1, wherein a length of the search range is shorter than a shorter of a length (E) of the encoded bit and a length (N = NbZ) of a mother code.

3. The method of claim 1, wherein determining the search range of the at least one element comprises:
performing decoding of the first input sequence;
identifying a first output sequence generated or updated based on the decoding; and
determining the search range of the at least one element, based on the first output sequence.

4. The method of claim 1, wherein the search range is predetermined or determined based on at least one of an information bit, a punctured bit within the information bit, and a shortened bit within the information bit.

5. The method of claim 1, wherein a length of the search range is a value (K-2Z-F) obtained by subtracting a length (2Z) of a punctured bit within an information bit and a length (F) of a shortened bit within the information bit from a length (K) of a systematic part.

6. The method of claim 3, wherein determining the search range of the at least one element, based on the first output sequence, comprises,
in case that the first output sequence is updated, determining the search range of the at least one element, based on one of locations of updated elements in the first output sequence, a location of an updated information bit in the first output sequence, a location of an updated systematic punctured bit in the first output sequence.

7. The method of claim 1, further comprising receiving information necessary for the decoding from the transmission device,
wherein the first input sequence is decoded based on the information necessary for the decoding.

8. The method of claim 7, wherein, in case that the reception device is a terminal and the transmission device is a base station, the information necessary for the decoding is transmitted through a higher layer message.

9. The method of claim 1, wherein, in case that the first input sequence is a log-likelihood ratio (LLR) sequence, determining the at least one element used to generate the plurality of second input sequences comprises determining the at least one element corresponding to n predetermined elements having low confidence values.

10. The method of claim 9, wherein generating the plurality of second input sequences comprises
generating the plurality of second input sequences corresponding to 2n second input sequences by changing the determined at least one element corresponding to the n predetermined elements in the first input sequence.

11. A reception device for performing decoding of a channel code in a wireless communication system, the reception device comprising:
a transceiver; and
at least one processor,
wherein the at least one processor is configured to:
generate a first input sequence, based on a bit that is received from a transmission device and encoded with a channel code;
in the first input sequence, determine, based on a structure of the channel code, a search range of at least one element to be changed in order to generate a plurality of second input sequences;
determine, based on the search range, the at least one element used to generate the plurality of second input sequences;
generate the at least one second input sequence by changing the plurality of elements; and
determine a final decoding result by performing decoding of each of the plurality of second input sequences.

12. The reception device of claim 11, wherein a length of the search range is shorter than a length (E) of the encoded bit.

13. The reception device of claim 11, wherein the at least one processor is configured to:
perform decoding of the first input sequence;
identify a first output sequence generated or updated based on the decoding; and
determine the search range of the at least one element, based on the first output sequence.

14. The reception device of claim 11, wherein the search range is predetermined or determined based on at least one of an information bit, a punctured bit within the information bit, and a shortened bit within the information bit.

15. The reception device of claim 11, wherein a length of the search range is a value (K-2Z-F) obtained by subtracting a length (2Z) of a punctured bit within an information bit and a length (F) of a shortened bit within the information bit from a length (K) of a systematic part.
